# EUROPÄISCHE PATENTSCHRIFT

(11) **EP 3 658 459 B1**
(45) Veröffentlichungstag und Bekanntmachung des Hinweises auf die Patenterteilung: **13.09.2023**
(21) Anmeldenummer: 18749759.9
(22) Anmeldetag: 27.07.2018
(51) Int. Cl.: B64D 11/06, A47B 5/00, A47B 5/04, B60N 3/00, A47B 3/06

(54) **FLUGZEUGSITZ MIT EINER TISCHVORRICHTUNG**
AIRCRAFT SEAT WITH A TABLE DEVICE
SIÈGE D'AÉRONEF AVEC UN DISPOSITIF DE TABLE

(30) Priorität: 28.07.2017 DE 102017117173
(43) Veröffentlichungstag der Anmeldung: 03.06.2020
(73) Patentinhaber: Recaro Aircraft Seating GmbH & Co. KG, 74523 Schwäbisch Hall (DE)
(72) Erfinder: SCHWEIZER, Oliver, 88161 Lindenberg (DE); ERB, Andreas, 74523 Schwäbisch Hall (DE); SCHREYER, Tim, 74523 Schwäbisch Hall (DE); THIELE, Maik, 74535 Mainhardt (DE); WEISENBERGER, Simon, 91578 Leutershausen (DE); DRENZECK, Thomas, 74545 Michelfeld (DE); MÜLLER, Michael, 74420 Oberrot (DE); WAGNER, Michael, 74523 Schwäbisch Hall (DE); FRÖBEL, Marcel, 74547 Untermünkheim (DE); LAKEIT, Stefan, 97953 Königheim (DE); REICHERT, Jan, 74360 Ilsfeld (DE); DERN, Patrick, 58708 Menden (DE)
(74) Vertreter: Daub, Thomas
(86) Internationale Anmeldenummer: PCT/EP2018/070488
(87) Internationale Veröffentlichungsnummer: WO 2019/020813

(56) Entgegenhaltungen:
- EP-A1- 2 708 413
- EP-A1- 2 930 110
- WO-A1-2017/003521
- WO-A1-2017/034624
- WO-A1-2017/095477
- CN-U- 203 255 004
- CN-Y- 200 971 062

## Beschreibung

### Stand der Technik

Die Erfindung betrifft einen Flugzeugsitz mit einer Tischvorrichtung nach dem Oberbegriff des Patentanspruchs 1.

Es ist bereits eine Tischvorrichtung für einen Sitz, insbesondere für einen Flugzeugsitz, mit einer Tischeinheit, die dazu vorgesehen ist, zumindest zwischen einer Gebrauchsstellung und einer Verstaustellung verstellbar zu sein, und mit wenigstens einem Verriegelmodul, das wenigstens eine Anbindungseinheit aufweist, die dazu vorgesehen ist, zumindest teilweise fest mit einem Sitzbauteil verbunden zu werden, wobei die Tischeinheit zumindest in der Verstaustellung an der Anbindungseinheit verriegelbar ist, vorgeschlagen worden.

Die Druckschrift CN 200 971 062 Y offenbart eine Tischvorrichtung für einen Flugzeugsitz, mit einer Tischeinheit, die verschwenkbar ist, und wenigstens ein Verriegelmodul, mit einer Anbindungseinheit, die an der Tischeinheit angeordnet ist, wobei die Tischeinheit zumindest in der Verstaustellung an der Anbindungseinheit verriegelbar ist, wobei das Verriegelmodul zumindest zwei Formschlusselemente aufweist, mittels deren die Tischeinheit in einem verriegelten Zustand formschlüssig mit der Anbindungseinheit gekoppelt ist, wobei die Formschlusselemente dabei in der Tischeinheit angeordnet sind und seitlich aus der Tischeinheit hinaus ragen, um die Tischeinheit mit dem Verriegelmodul zu verriegeln. Weiter ist ein Betätigungsmechanismus offenbart, über den die Formschlusselemente bewegt werden können.

Die Druckschrift EP 2 708 413 A1 offenbart eine Tischeinheit mit einem integrierten Bildschirm, wobei die Tischeinheit über eine Lagereinheit schwenkbar, und axial verschiebbar mit der Rückenlehne verbunden und über eine Anbindungseinheit an der Rückenlehne arretierbar ist, wobei die Anbindungseinheit ein Formschlusselement, das an einer Oberkante der Tischeinheit angeordnet ist und ein korrespondierend ausgebildetes Formschlusselement aufweist, das an einer Anbindungseinheit an der Rückenlehne angeordnet ist.

Die Druckschrift WO 2017/034624 A1 offenbart einen Flugzeugsitz mit einer Rückenlehne und einer Tischeinheit, die an der Rückenlehne befestigbar ist, mit einem Verriegelmodul, das wenigstens eine Anbindungseinheit aufweist, die in einem montierten Zustand fest und fixiert mit dem als Rückenlehne ausgebildeten Sitzbauteil verbunden ist und in der Formschlusselemente angeordnet sind, wobei das Verriegelmodul einen Betätigungsmechanismus umfasst, der in der Anbindungseinheit angeordnet ist, und ein Betätigungselement, das den Betätigungsmechanismus betätigt und ebenfalls in der Anbindungseinheit angeordnet ist.

Die Druckschrift EP 2 930 110 A1 offenbart eine Tischeinheit, die mittels einer Anbindungseinheit in einer Verstaustellung fixierbar ist, mit Formschlusselementen und einem Betätigungsmechanismus, der in der Tischeinheit angeordnet ist, wobei die Formschlusselemente in Form von ferromagnetischen Elementen ausgebildet sind, die durch in der Anbindungseinheit angeordnete Magnete in eine Verriegelstellung gebracht werden können.

Die Aufgabe der Erfindung besteht insbesondere darin, eine gattungsgemäße Vorrichtung mit verbesserten Eigenschaften hinsichtlich einer Sicherheit und einer besseren Verriegelung in einem Crashfall bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Flugzeugsitz, mit zumindest einem Sitzbauteil, insbesondere einem als Rückenlehne ausgebildeten Sitzbauteil, und mit einer Tischvorrichtung für den Flugzeugsitz, mit einer Tischeinheit, die dazu vorgesehen ist, zumindest zwischen einer Gebrauchsstellung und einer Verstaustellung verstellbar zu sein, und mit wenigstens einem Verriegelmodul, das wenigstens eine Anbindungseinheit aufweist, die in einem montierten Zustand fest und fixiert mit dem Sitzbauteil verbunden ist, wobei die Tischeinheit zumindest in der Verstaustellung an der Anbindungseinheit verriegelbar ist, wobei die Tischeinheit zumindest in der Verstaustellung an der Anbindungseinheit verriegelbar ist, wobei das Verriegelmodul zumindest zwei Kraft- und/oder Formschlusselemente aufweist, mittels deren die Tischeinheit in einem verriegelten Zustand form- und/oder kraftschlüssig mit der Anbindungseinheit gekoppelt ist, wobei das Verriegelmodul einen Betätigungsmechanismus aufweist, der in der Anbindungseinheit angeordnet und dazu vorgesehen ist, die Kraft- und/oder Formschlusselemente zu betätigen, und das Verriegelmodul wenigstens ein Betätigungselement aufweist, das bei einer Kopplung mit der Anbindungseinheit dazu vorgesehen ist, den Betätigungsmechanismus zu betätigen, und das zur händischen Bedienung durch einen Passagier vorgesehen ist.

Es wird vorgeschlagen, dass das Betätigungselement an die Tischeinheit angebunden ist, und wenigstens ein Kraft- und/oder Formschlusselement aufweist, mittels dessen die Tischeinheit in einem verriegelten Zustand form- und/oder kraftschlüssig mit der Anbindungseinheit gekoppelt ist. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Flugzeugsitz einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Tischeinheit" soll dabei insbesondere eine Einheit verstanden werden, die zumindest eine Tischfläche ausbildet, die in zumindest einer Gebrauchsstellung zumindest im Wesentlichen parallel zu einer Aufständerebene des Sitzes, insbesondere des Flugzeugsitzes, ausgerichtet ist, wobei die Tischfläche dazu vorgesehen ist, dass von einem Passagier Gegenstände darauf abgestellt werden können. Unter einer "Gebrauchsstellung" soll dabei insbesondere eine Stellung der Tischeinheit verstanden werden, in der die Tischeinheit von dem Sitzbauteil weggeschwenkt ist und die von der Tischeinheit ausgebildete Tischfläche genutzt werden kann, um darauf Gegenstände abzustellen. Die Gebrauchsstellung der Tischeinheit ist dabei als eine Stellung ausgebildet, in der die Tischfläche der Tischeinheit im Wesentlichen parallel zu der Aufständerebene, auf der der Sitz aufgeständert ist, ausgerichtet ist. Die Gebrauchsstellung ist als eine Stellung der Tischeinheit ausgebildet, in der die Tischeinheit in einer vorgesehenen Weise von einem Passagier benutzbar ist. Unter einer "Verstaustellung" soll dabei insbesondere eine Stellung der Tischeinheit verstanden werden, in der die Tischeinheit an das Sitzbauteil herangeschwenkt ist und insbesondere platzsparend an dem Sitzbauteil angeordnet ist. Dabei ist die Tischfläche der Tischeinheit vorzugsweise dem Sitzbauteil, insbesondere dem als Rückenlehne ausgebildeten Sitzbauteil, zugewandt. In der Verstaustellung ist die Tischeinheit nicht in einer vorgesehenen Weise von einem Passagier benutzbar. Unter einem "Verriegelmodul" soll dabei insbesondere ein Modul verstanden werden, über das die Tischeinheit in der Verstaustellung fest an dem Sitzbauteil angeordnet und verriegelt ist. Dabei ist das Verriegelmodul insbesondere dazu vorgesehen, die Tischeinheit in der Verstaustellung so zu verriegeln, dass ein ungewolltes Lösen der Tischeinheit von dem Sitzbauteil, insbesondere auch in einem Crashfall, verhindert werden kann. Das Verriegelmodul ist insbesondere dazu vorgesehen, dass in einem Crashfall, insbesondere wenn ein Passagier oder Dummy auf dem Sitzbauteil auftrifft, die Tischeinheit nicht von dem Sitzbauteil abhebt. Unter einem "Crashfall" soll dabei insbesondere ein Überlastfall verstanden werden, also ein Betriebszustand, in dem Kräfte auf den Flugzeugsitz, wirken, die größer sind als Kräfte, die durch eine normale Belastung bei einem normalen Flugbetrieb entstehen. Unter einem "Sitzbauteil" soll dabei insbesondere ein Bauteil eines Flugzeugsitzes verstanden werden, wie insbesondere eine Rückenlehne oder ein Teil einer festen Struktur des Flugzeugsitzes. Grundsätzlich ist es auch denkbar, dass das Sitzbauteil als ein anderes, dem Fachmann als sinnvoll erscheinendes Bauteil eines Flugzeugsitzes oder eines Flugzeugsitzanbauteils ausgebildet ist, wie beispielsweise eine Konsole oder ein Abdeckelement. Unter einer "Anbindungseinheit" soll dabei insbesondere eine Einheit verstanden werden, mit der die Tischeinheit zur Verriegelung in der Verstaustellung kraft- und oder formschlüssig verbunden wird. Darunter, dass die "Anbindungseinheit zumindest teilweise fest mit dem Sitzbauteil verbunden ist", soll dabei insbesondere verstanden werden, dass zumindest ein Teil der Anbindungseinheit, vorzugsweise die gesamte Anbindungseinheit, in einem montierten Zustand fest und fixiert mit dem Sitzbauteil verbunden ist, sowohl in der Verstaustellung als auch in der Gebrauchsstellung der Tischeinheit. Grundsätzlich ist es auch denkbar, dass die Anbindungseinheit dabei zumindest teilweise einstückig mit dem Sitzbauteil ausgebildet ist. Unter einem "Kraft- und/oder Formschlusselement" soll dabei insbesondere ein Element verstanden werden, das dazu vorgesehen ist, mit einem korrespondierend ausgebildeten Kraft- und/oder Formschlusselement kraft- und/oder formschlüssig verbunden zu werden, um so insbesondere zwei Elemente, mit denen die Kraft- und/oder Formschlusselemente gekoppelt sind, miteinander zu verbinden. Eine kraft- und/oder formschlüssige Verbindung zwischen den beiden Elementen kann dabei rein kraftschlüssig, rein formschlüssig oder eine als eine Kombination aus kraftschlüssig und formschlüssig ausgebildet sein. Unter "kraft- und/oder formschlüssig gekoppelt" soll dabei insbesondere über eine lösbare Verbindung miteinander verbunden verstanden werden, wobei eine Haltekraft zwischen zwei Elementen vorzugsweise durch einen geometrischen Eingriff der Elemente ineinander und/oder eine Reibkraft zwischen den Elementen übertragen wird. Unter "zumindest zwei "Kraft- und/oder Formschlusselementen" soll dabei insbesondere verstanden werden, dass das Verriegelmodul zumindest zwei, in einer bevorzugten Ausgestaltung drei Kraft- und/oder Formschlusselemente aufweist, wobei grundsätzlich auch denkbar ist, dass das Verriegelmodul mehr Kraft- und/oder Formschlusselemente umfasst. Die zumindest zwei Kraft- und/oder Formschlusselemente sind dabei vorzugsweise jeweils außermittig angeordnet. Die zumindest zwei Kraft- und/oder Formschlusselemente sind beabstandet zu einer Mittelebene der Tischeinheit angeordnet. Dabei sind die zumindest zwei Kraft- und/oder Formschlusselemente vorzugsweise auf gegenüberliegenden Seiten der Mittelebene der Tischeinheit angeordnet und weisen insbesondere jeweils einen gleichen Abstand von der Mittelebene auf. In einer besonders vorteilhaften Ausgestaltung sind die zumindest zwei Kraft- und/oder Formschlusselemente vorteilhaft in gegenüberliegenden Randbereichen der Tischeinheit angeordnet. Unter einem "Randbereich der Tischeinheit" ist dabei insbesondere jeweils ein Bereich zu verstehen, der von einer Seitenkante der Tischeinheit bis zu 10 cm weit, vorzugsweise 5 cm weit in Richtung einer Mittelebene der Tischeinheit reicht. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann vorteilhaft eine Verriegelung der Tischeinheit in der Verstaustellung erreicht werden, die insbesondere robust ausgebildet ist und ein ungewolltes Lösen der Tischeinheit von dem Sitzbauteil auch in einem Crashfall verhindert. Dadurch kann vorteilhaft eine Tischvorrichtung für einen Sitz, insbesondere einen Flugzeugsitz, bereitgestellt werden, die in einem Crashfall besonders sicher ist und insbesondere eine Verletzungsgefahr verringert.

Weiter wird vorgeschlagen, dass die Kraft- und/oder Formschlusselemente dazu vorgesehen sind, zwischen einer zumindest im Wesentlichen in der Anbindungseinheit angeordneten Freigabestellung und einer Verriegelstellung, in der die Kraft- und/oder Formschlusselemente zumindest teilweise in die Tischeinheit formschlüssig eingreifen, verstellt zu werden. Unter einer "Freigabestellung" soll dabei insbesondere eine Stellung der Kraft- und/oder Formschlusselemente verstanden werden, in der die Kraft- und/oder Formschlusselemente die Tischeinheit freigeben und diese nicht kraft- und/oder formschlüssig an die Anbindungseinheit und dadurch an das Sitzbauteil koppeln. In der Freigabestellung der Kraft- und/oder Formschlusselemente kann die Tischeinheit aus ihrer Verstaustellung in die Gebrauchsstellung verstellt werden. Unter einer "Verriegelstellung" soll dabei insbesondere eine Stellung der Kraft- und/oder Formschlusselemente verstanden werden, in der die Kraft- und/oder Formschlusselemente zumindest aus der Anbindungseinheit herausragen und so kraft- und/oder formschlüssig mit der Tischeinheit, insbesondere mit von der Tischeinheit ausgebildeten Kraft- und/oder Formschlusselementen, verbindbar sind, wenn die Tischeinheit entsprechend in der Verstaustellung positioniert ist. In der Verriegelstellung verriegeln die Kraft- und/oder Formschlusselemente die Tischeinheit in ihrer Verstaustellung. Greifen die Kraft- und/oder Formschlusselemente in ihrer Verriegelstellung kraft- und/oder formschlüssig in die in der Verstaustellung angeordnete Tischeinheit ein, ist die Tischeinheit verriegelt und kann nicht aus der Verstaustellung herausbewegt werden. Dadurch kann die Tischeinheit besonders sicher mit der Anbindungseinheit verbunden werden.

Unter einem "Betätigungsmechanismus" soll dabei insbesondere ein Mechanismus verstanden werden, der dazu vorgesehen ist, die Kraft- und/oder Formschlusselemente, die in der Anbindungseinheit angeordnet sind, zwischen ihrer Freigabestellung und ihrer Verriegelstellung zu verstellen. Dabei ist der Betätigungsmechanismus insbesondere dazu vorgesehen, die Kraft- und/oder Formschlusselemente in einem unbetätigten Zustand in ihre Freigabestellung zu bewegen und zu halten und in einem betätigten Zustand in ihre Verriegelstellung zu bewegen und zu halten. Unter "zumindest im Wesentlichen in der Anbindungseinheit angeordnet" soll dabei insbesondere verstanden werden, dass zumindest ein Großteil der Elemente des Betätigungsmechanismus in der Anbindungseinheit, insbesondere in einem von der Anbindungseinheit aufgespannten Raum, angeordnet ist. Vorzugsweise ist der gesamte Betätigungsmechanismus in der Anbindungseinheit angeordnet. Dadurch können die Kraft- und/oder Formschlusselemente besonders einfach betätigt werden und das Verriegelmodul kann besonders einfach ausgebildet werden.

Unter einem "Betätigungselement" soll dabei insbesondere ein Element verstanden werden, das zur Bedienung durch einen Passagier vorgesehen und entsprechend ausgebildet ist. Das Betätigungselement ist dabei insbesondere dazu vorgesehen, die Kraft- und/oder Formschlusselemente des Verriegelungsmoduls mittels des Betätigungsmechanismus von ihrer Freigabestellung in ihre Verriegelstellung zu verstellen. Unter einer "händischen Bedienung" soll dabei insbesondere eine Manipulation durch einen Passagier mittels dessen Hand verstanden werden. Dabei ist das Betätigungselement dazu vorgesehen, von einem Bediener gedrückt, axial verschoben und/oder verdreht zu werden. Unter "an die Tischeinheit angebunden" soll dabei insbesondere verstanden werden, dass das Betätigungselement ortsfest an der Tischeinheit angebunden ist und mit der Tischeinheit zwischen ihrer Verstaustellung und Gebrauchsstellung bewegt wird. Dadurch kann das Verriegelmodul besonders vorteilhaft zur einfachen Bedienung durch einen Passagier ausgebildet werden.

Des Weiteren wird vorgeschlagen, dass das Betätigungselement als ein Drehelement ausgebildet ist, das mit seinem Kraft- und/oder Formschlusselement in einem Verriegelzustand zumindest teilweise in die Anbindungseinheit eingreift. Unter einem "Drehelement" soll dabei insbesondere ein Element verstanden werden, das durch Rotation um eine Rotationsachse von dem Passagier betätigbar ist. Dadurch kann das Betätigungselement besonders einfach ausgebildet werden.

Weiterhin wird vorgeschlagen, dass das Betätigungselement bei einer Kopplung mit der Anbindungseinheit dazu vorgesehen ist, eine Relativbewegung zwischen der Tischeinheit und der Anbindungseinheit auszulösen. Unter einer "Relativbewegung zwischen der Tischeinheit und der Anbindungseinheit" soll dabei insbesondere eine Bewegung der Tischeinheit relativ zu der Anbindungseinheit und dem Sitzbauteil, vorzugsweise in einer Vertikalrichtung, verstanden werden. Unter "bei einer Kopplung eine Relativbewegung auslösen" soll dabei insbesondere verstanden werden, dass die Relativbewegung durch einen Eingriff des Betätigungselements in die Anbindungseinheit und insbesondere durch eine Bewegung, insbesondere eine Drehung des Betätigungselements, ausgelöst wird. Dadurch kann die Tischeinheit besonders vorteilhaft an der Anbindungseinheit verriegelt werden.

Unter "den Betätigungsmechanismus betätigen" soll dabei insbesondere verstanden werden, dass das Betätigungselement den Betätigungsmechanismus so verstellt, dass der Betätigungsmechanismus die Kraft- und/oder Formschlusselemente von ihrer Freigabestellung in ihre Verriegelstellung bewegt. Dadurch können die Kraft- und/oder Formschlusselemente des Verriegelmoduls besonders vorteilhaft mittels des Betätigungselements betätigt werden.

Es wird weiter vorgeschlagen, dass die Kraft- und/oder Formschlusselemente dazu vorgesehen sind, die Tischeinheit durch einen Reibschluss zu verriegeln und bei einer Kraft in einer Öffnungsrichtung der Tischeinheit durch eine Selbstverstärkung den Reibschluss zu vergrößern. Unter einer "Öffnungsrichtung" soll dabei insbesondere eine Richtung verstanden werden, in die die Tischeinheit aus ihrer Verriegelstellung herausbewegt werden muss, um in ihre Gebrauchsstellung zu gelangen. Dadurch kann die Tischvorrichtung in der Verstaustellung besonders vorteilhaft gesichert werden.

Zudem wird vorgeschlagen, dass die Kraft- und/oder Formschlusselemente jeweils als ein Nocken ausgebildet sind, der zur Verriegelung dazu vorgesehen ist, die Tischeinheit zumindest über einen Reibschluss zu fixieren. Unter "durch einen Reibschluss fixieren" soll dabei insbesondere verstanden werden, dass eine zur Verriegelung in der Verstaustellung benötigte Haltekraft der beiden Kraft- und/oder Formschlusselemente lediglich durch einen Kraftschluss erfolgt. Dadurch kann die Tischeinheit besonders einfach in der Verstaustellung gehalten werden.

Weiter wird vorgeschlagen, dass die als Nocken ausgebildeten Kraft- und/oder Formschlusselemente verschwenkbar gelagert, vorzugsweise exzentrisch verschwenkbar gelagert, und dazu vorgesehen sind, bei einer Öffnungsbewegung der Tischeinheit verschwenkt zu werden. Unter "exzentrisch verschwenkbar gelagert" soll dabei insbesondere verstanden werden, dass das als Nocken ausgebildete Kraft- und/oder Formschlusselement um eine Schwenkachse gelagert ist, die zu einem Schwerpunkt des als Nocken ausgebildeten Kraft- und/oder Formschlusselements versetzt angeordnet ist. Dadurch kann das als Nocken ausgebildete Kraft- und/oder Formschlusselement besonders vorteilhaft gelagert werden, um die Tischvorrichtung in der Verstaustellung sicher zu lagern.

Ferner wird vorgeschlagen, dass die Kraft- und/oder Formschlusselemente in der Tischeinheit angeordnet und dazu vorgesehen sind, zur Verriegelung der Tischeinheit jeweils von wenigstens einem in der Anbindungseinheit angeordneten Formschlusselement zumindest im Wesentlichen umschlossen zu werden, wobei das in der Anbindungseinheit angeordnete Formschlusselement zur Entriegelung elastisch auslenkbar und/oder bewegbar gelagert ist. Unter "in der Tischeinheit angeordnet" soll dabei insbesondere verstanden werden, dass die Kraft- und/oder Formschlusselemente zumindest teilweise innerhalb eines Grundkörpers angeordnet sind, der die Tischeinheit ausbildet. Dabei sind die Kraft- und/oder Formschlusselemente vorzugsweise in einer in den Grundkörper, der die Tischeinheit ausbildet, eingebrachten Ausnehmung angeordnet. Dabei ragen die Kraft- und/oder Formschlusselemente vorzugsweise nicht über eine von der Tischfläche ausgebildete Ebene hinaus. Unter "elastisch auslenkbar" soll dabei insbesondere aufgrund einer einwirkenden Kraft in einem elastischen Bereich in seiner Form verändert, also gestaucht, gedehnt und/oder ausgelenkt verstanden werden, wobei nach einem Wegfall der einwirkenden Kraft eine Ruhestellung eingenommen wird. Dadurch kann eine besonders vorteilhafte Verriegelung der Tischeinheit erreicht werden.

Es wird weiterhin vorgeschlagen, dass das Verriegelmodul wenigstens ein Entriegelungselement aufweist, das an der Tischeinheit angebunden und zur Entriegelung der Kraft- und/oder Formschlusselemente dazu vorgesehen ist, das wenigstens eine Formschlusselement zumindest teilweise elastisch zu verformen und/oder zu bewegen. Dadurch kann eine Verriegelung der Tischeinheit besonders einfach aufgehoben werden.

Des Weiteren wird vorgeschlagen, dass die Kraft- und/oder Formschlusselemente dazu vorgesehen sind, die Tischeinheit in einer, in Öffnungsrichtung der Tischeinheit lösbaren kraft- und/oder formschlüssigen Verbindung mit der Anbindungseinheit zu koppeln. Dadurch kann die Tischeinheit besonders einfach mit der Anbindungseinheit gekoppelt werden.

Weiterhin wird vorgeschlagen, dass das Verriegelmodul einen Betätigungsmechanismus aufweist, der wenigstens ein Hebelelement umfasst, das dazu vorgesehen ist, wenigstens eines der Kraft- und/oder Formschlusselemente aktiv aus einer Verriegelstellung zu drücken oder zu ziehen. Dadurch kann eine Verriegelung der Kraft- und/oder Formschlusselemente besonders einfach gelöst werden.

Zudem wird vorgeschlagen, dass die Tischeinheit von wenigstens zwei Grundkörpern ausgebildet ist, die über wenigstens eine Lagereinheit schwenkbar miteinander verbunden sind, die dazu wenigstens ein Gelenkelement aufweisen, wobei die von der Tischeinheit ausgebildeten Kraft- und/oder Formschlusselemente von einem Gelenkelement ausgebildet sind. Unter einer "Lagereinheit" soll dabei insbesondere eine Einheit verstanden werden, mit wenigstens einem Gelenk, das eine Schwenkachse ausbildet, über das wenigstens zwei Elemente, wie insbesondere die zwei Grundkörper, zueinander verschwenkbar sind. Unter einem "Gelenkelement" soll dabei insbesondere ein Element der Gelenkeinheit, wie insbesondere ein Lagerbolzen oder Lagerstift verstanden werden. Grundsätzlich ist es auch denkbar, dass ein Gelenkelement von einem anderen Element der Gelenkeinheit, oder einem zusätzlichen Element, das mit der Gelenkeinheit verbunden ist, ausgebildet ist. Dadurch können die Kraft- und/oder Formschlusselemente der Tischeinheit besonders vorteilhaft ausgebildet werden.

Ferner wird ein erfindungsgemäßer Flugzeugsitz, mit zumindest einem Sitzbauteil und einer Tischvorrichtung vorgeschlagen, wobei das Sitzbauteil einen Aufbewahrungsbereich, insbesondere eine hohe Literarturtasche, ausbildet, wobei die Tischvorrichtung eine als Rückenlehnenbrücke ausgebildete Anbindungseinheit aufweist, wobei zwischen der Anbindungseinheit und dem Sitzbauteil eine Öffnung angeordnet ist, die eine Befüllungsöffnung des Aufbewahrungsbereichs ausbildet. Dadurch kann ein besonders vorteilhafter Sitz bereitgestellt werden, in den die Tischvorrichtung besonders vorteilhaft integriert ist.

Die erfindungsgemäße Tischvorrichtung soll hierbei nicht auf die oben beschriebenen Anwendungen und Ausführungsformen beschränkt sein. Insbesondere kann die erfindungsgemäße Tischvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine schematische Schnittansicht einer Teils eines erfindungsgemäßen Sitzes mit einer Tischvorrichtung und einem Sitzbauteil das einen Aufbewahrungsbereich ausbildet,
- Fig. 2: eine schematische Darstellung einer Tischvorrichtung in einem ersten Ausführungsbeispiel mit einer Tischeinheit in einer Verstaustellung in einem verriegelten Zustand,
- Fig. 3: eine schematische Darstellung der Tischeinheit in der Verstaustellung und des Verriegelmoduls in einem entriegelten Zustand,
- Fig. 4: eine schematische Darstellung der Tischeinheit und des Verriegelmoduls in einer Explosionsansicht,
- Fig. 5: eine schematische Darstellung einer Tischvorrichtung in einem zweiten Ausführungsbeispiel mit einer Tischeinheit in einer Verstaustellung und in einem verriegelten Zustand,
- Fig. 6: eine erste Schnittansicht durch die Tischeinheit und ein Verriegelmodul in einem Mittelbereich,
- Fig. 7: eine erste Schnittansicht durch die Tischeinheit und das Verriegelmodul in einem Randbereich,
- Fig. 8: eine schematische Darstellung einer Tischvorrichtung in einem dritten Ausführungsbeispiel mit einer Tischeinheit in einer Gebrauchsstellung,
- Fig. 9: eine schematische Darstellung eines Verriegelmoduls der Tischvorrichtung in einem verriegelten Zustand,
- Fig. 10: eine schematische Detailansicht des Verriegelmoduls der Tischvorrichtung in einem verriegelten Zustand,
- Fig. 11: eine schematische Detailansicht des Verriegelmoduls der Tischvorrichtung in einem entriegelten Zustand,
- Fig. 12: eine schematische Darstellung einer Tischvorrichtung in einem vierten Ausführungsbeispiel mit einer Tischeinheit in einer Verstaustellung und einem Verriegelmodul in einem verriegelten Zustand,
- Fig. 13: eine schematisierte Darstellung eines Teils des Verriegelmoduls in dem verriegelten Zustand,
- Fig. 14: eine weitere schematisierte Darstellung eines Teils des Verriegelmoduls in dem verriegelten Zustand,
- Fig. 15: eine schematische Darstellung einer Tischvorrichtung in einem fünften Ausführungsbeispiel mit einer Tischeinheit in einer Verstaustellung und einem Verriegelmodul in einem verriegelten Zustand,
- Fig. 16: eine schematische Darstellung des Verriegelmoduls mit schematisch dargestellten Formschlusselementen,
- Fig. 17: eine schematische Darstellung einer Tischvorrichtung in einem sechsten Ausführungsbeispiel mit einer Tischeinheit in einer Verstaustellung und einem Verriegelmodul in einem verriegelten Zustand und mit einem Sicherheitsmodul und
- Fig. 18: eine schematische Detaildarstellung des Sicherheitsmoduls der Tischvorrichtung in dem sechsten Ausführungsbeispiel.

### Beschreibung der Ausführungsbeispiele

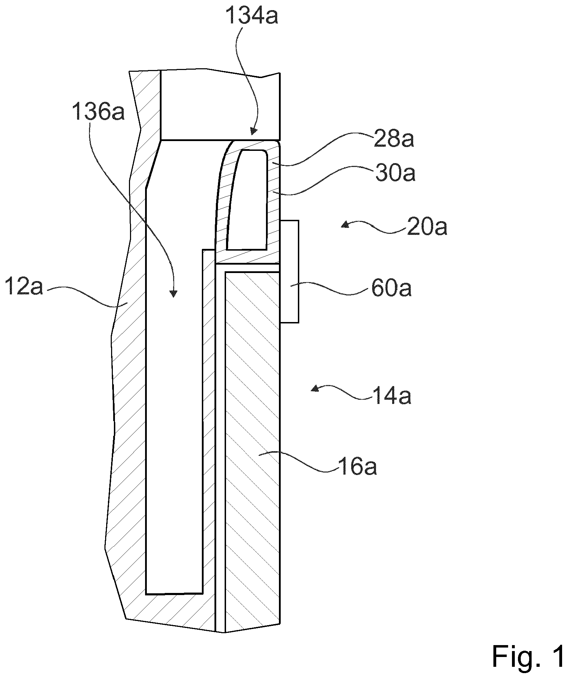

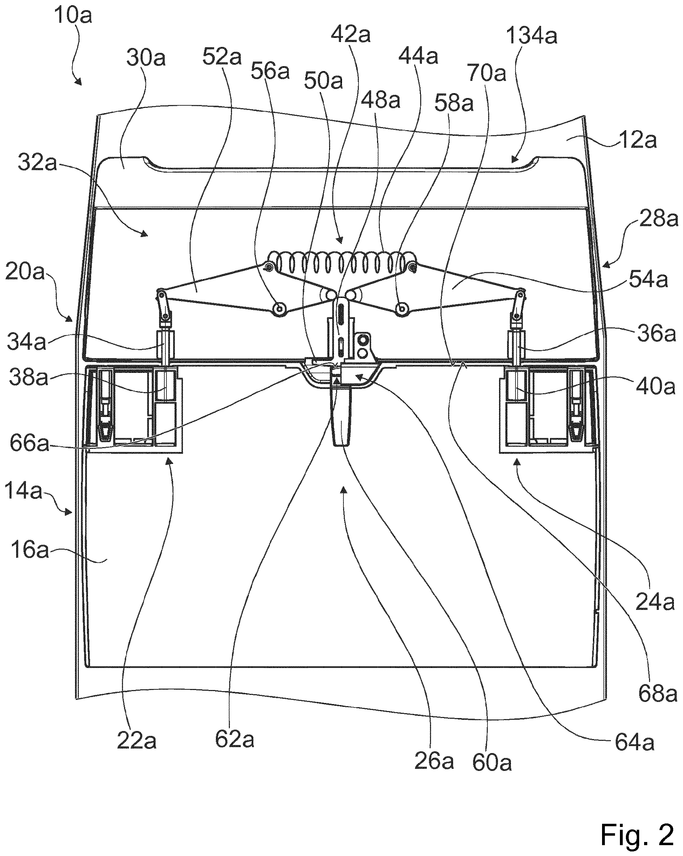

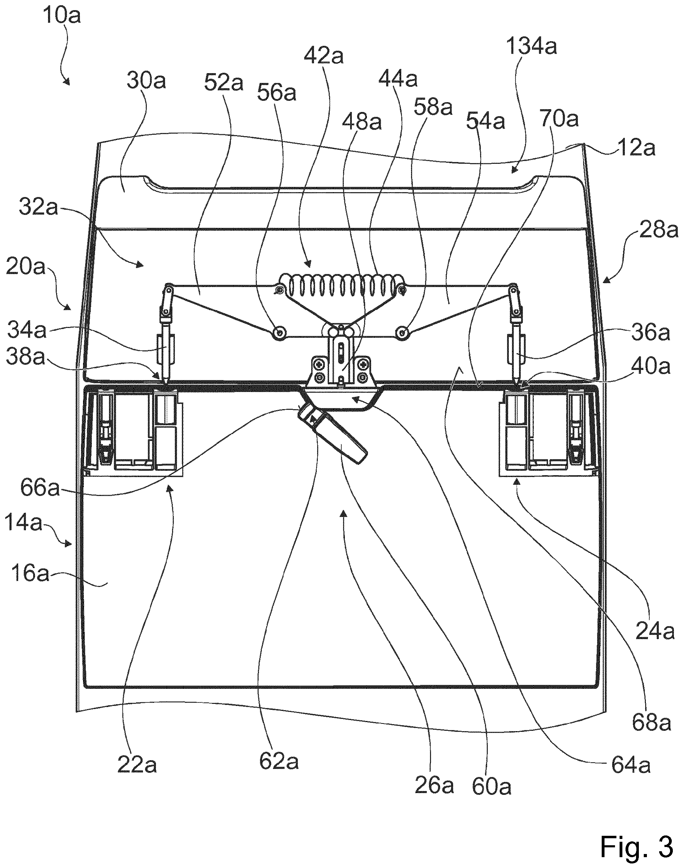

Die Figuren 1 bis 4 zeigen eine Tischvorrichtung für einen Sitz 10a in einem ersten Ausführungsbeispiel. Der Sitz 10a ist als ein Flugzeugsitz ausgebildet. Der Sitz 10a ist dabei in den Figuren lediglich angedeutet. Der Sitz 10a weist ein Sitzbauteil 12a auf. Das Sitzbauteil 12a ist als eine Rückenlehne ausgebildet. Der als Flugzeugsitz ausgebildete Sitz 10a ist in dem beschriebenen Ausführungsbeispiel wie ein aus dem Stand der Technik bekannter Flugzeugsitz ausgebildet und soll hier deshalb nicht näher beschrieben werden. Grundsätzlich ist es auch denkbar, dass der Sitz 10a als ein anderer, dem Fachmann als sinnvoll erscheinender Sitz ausgebildet ist, beispielsweise als ein in einem Bus oder Zug angeordneter Passagiersitz. Der Sitz 10a ist mittels einer Aufständereinheit auf einer Aufständerebene aufgeständert. Die Aufständerebene ist von einem Kabinenboden gebildet.

Die Tischvorrichtung umfasst eine Tischeinheit 14a. Die Tischeinheit 14a ist von einem Grundkörper 16a ausgebildet. Der Grundkörper 16a bildet einen Tischgrundkörper aus. Der Grundkörper 16a ist aus einem Kunststoff gebildet. Der Grundkörper 16a bildet dabei zumindest teilweise einen Hohlkörper aus. Die Tischeinheit 14a ist an dem Sitz 10a angebunden. Der Grundkörper 16a ist dabei von einer Grundschale und einer fest mit der Grundschale verbundenen Platte ausgebildet. Grundsätzlich ist es auch denkbar, dass der Grundkörper 16a aus einem anderen, dem Fachmann als sinnvoll erscheinenden Material gebildet ist und/oder einen anderen, dem Fachmann als sinnvoll erscheinenden Aufbau aufweist. Grundsätzlich ist der Grundkörper 16a, der die Tischeinheit 14a ausbildet, entsprechend dem Stand der Technik ausgebildet. Die Tischeinheit 14a weist eine Tischfläche 18a auf. Die Tischfläche 18a ist als eine Oberfläche des Grundkörpers 16a ausgebildet. Die Tischeinheit 14a ist über eine Schwenklagerung mit dem Sitz 10a gekoppelt. Die Tischvorrichtung umfasst ein nicht näher dargestelltes Lagermodul, mit dem die Tischeinheit 14a verschwenkbar mit dem Sitz 10a verbunden ist. Das Lagermodul umfasst dabei zwei Lagerarme, die an einem ersten Ende jeweils über ein Schwenklager verschwenkbar an dem Sitz 10a angebunden sind. Die Lagerarme sind dabei mit ihrem ersten Ende an dem als Rückenlehne ausgebildeten Sitzbauteil 12a oder an nicht näher dargestellten Sitzteilern des Sitzes 10a angebunden. An einem zweiten Ende der Lagerarme ist die Tischeinheit 14a über Schwenklager mit den Lagerarmen verbunden. Die Tischeinheit 14a ist zwischen einer Verstaustellung und einer Gebrauchsstellung verstellbar. Die Tischeinheit 14a ist insbesondere über das Lagermodul zwischen der Gebrauchsstellung und der Verstaustellung verschwenkbar. In der Gebrauchsstellung ist die Tischeinheit 14a mit der Tischfläche 18a der Tischeinheit 14a im Wesentlichen parallel zu der Aufständerebene ausgerichtet, sodass Gegenstände auf der Tischfläche 18a der Tischeinheit 14a abgestellt werden können. In der Verstaustellung ist die Tischeinheit 14a an dem Sitzbauteil 12a angelehnt. Die Tischeinheit 14a ist mit ihrer Tischfläche 18a in Richtung des Sitzbauteils 12a ausgerichtet. In der Verstaustellung ist die Tischeinheit 14a an das Sitzbauteil 12a angeklappt und kann nicht zum Abstellen von Gegenständen genutzt werden.

Die Tischvorrichtung umfasst ein Verriegelmodul 20a. Das Verriegelmodul 20a ist dazu vorgesehen, die Tischeinheit 14a in ihrer Verstaustellung an dem Sitzbauteil 12a zu fixieren. Das Verriegelmodul 20a weist einen verriegelten Zustand auf, in dem das Verriegelmodul 20a die Tischeinheit 14a in ihrer Verstaustellung verriegelt. Das Verriegelmodul 20a weist einen entriegelten Zustand auf, in dem das Verriegelmodul 20a die Tischeinheit 14a freigibt, sodass diese aus der Verstaustellung herausbewegt werden kann. Das Verriegelmodul 20a ist insbesondere dazu vorgesehen, die Tischeinheit 14a so an dem Sitzbauteil 12a zu fixieren, dass die Tischeinheit 14a auch in einem Crashfall sicher an dem Sitzbauteil 12a fixiert ist. Dabei ist das Verriegelmodul 20a insbesondere dazu vorgesehen, die Tischeinheit 14a so an dem Sitzbauteil 12a zu fixieren, dass bei einem Auftreffen eines Körperteils eines hinter dem Sitz 10a sitzenden Passagiers auf dem Sitzbauteil 12a und/oder der Tischeinheit 14a in einem Crashfall und einer dadurch verursachten Verformung des Sitzbauteils 12a die Tischeinheit 14a zumindest teilweise mit dem Sitzbauteil 12a mitbewegt wird und so insbesondere verhindert wird, dass sich durch die Verformung des Sitzbauteils 12a ein Spalt zwischen dem Sitzbauteil 12a und der Tischeinheit 14a bilden kann, in dem sich der Passagier mit einem Körperteil verfangen kann. Das Verriegelmodul 20a ist insbesondere dazu vorgesehen, einen Versatz zwischen der Tischeinheit 14a und dem Sitzbauteil 12a zu verhindern. Zu diesem Zweck ist das Verriegelmodul 20a dazu vorgesehen, die Tischeinheit 14a in mehreren Positionen mit dem Sitzbauteil 12a zu koppeln. Das Verriegelmodul 20a ist insbesondere dazu vorgesehen, die Tischeinheit 14a in zwei gegenüberliegenden Randbereichen 22a, 24a mit dem Sitzbauteil 12a zu koppeln. Das Verriegelmodul 20a ist dazu vorgesehen, die Tischeinheit 14a zusätzlich in einem Mittelbereich 26a mit dem Sitzbauteil 12a zu koppeln. Mittels des Verriegelmoduls 20a ist die Tischeinheit 14a an drei Positionen fest mit dem Sitzbauteil 12a gekoppelt. Dadurch kann eine besonders stabile Fixierung der Tischeinheit 14a an dem Sitzbauteil 12a erreicht werden.

Das Verriegelmodul 20a weist eine Anbindungseinheit 28a auf. Die Anbindungseinheit 28a ist fest mit dem Sitzbauteil 12a verbunden. Grundsätzlich ist es auch denkbar, dass die Anbindungseinheit 28a zumindest teilweise oder komplett von dem Sitzbauteil 12a ausgebildet wird. Die Anbindungseinheit 28a weist ein Gehäuse 30a auf. Das Gehäuse 30a ist von einem Grundkörper gebildet. Das Gehäuse 30a ist von einer Grundschale und einer Abdeckplatte gebildet. Das Gehäuse 30a spannt einen Innenraum 32a auf. Der Innenraum 32a des Gehäuses 30a der Anbindungseinheit 28a ist dazu vorgesehen, dass Bauteile des Verriegelmoduls 20a darin angeordnet und/oder gelagert sind. Die Anbindungseinheit 28a ist starr mit dem Sitzbauteil 12a verbunden. Das Gehäuse 30a der Anbindungseinheit 28a ist fest mit dem Sitzbauteil 12a verbunden. Das Gehäuse 30a der Anbindungseinheit 28a ist insbesondere mit einer tragenden Struktur des Sitzbauteils 12a verbunden. Das Gehäuse 30a der Anbindungseinheit 28a ist über eine formschlüssige, kraftschlüssige und/oder stoffschlüssige Verbindung mit dem Sitzbauteil 12a verbunden.

Die Anbindungseinheit 28a ist als eine Rückenlehnenbrücke ausgebildet. Die Anbindungseinheit 28a ist in Randbereichen mit dem als Rückenlehne ausgebildeten Sitzbauteil 12a verbunden. In einem Mittelbereich weist die als Rückenlehnenbrücke ausgebildeten Anbindungseinheit 28a einen Abstand zu dem als Rückenlehne ausgebildeten Sitzbauteil 12a auf. Zwischen der Anbindungseinheit 28a und dem als Rückenlehne ausgebildeten Sitzbauteil 12a ist in dem Mittelbereich eine Öffnung 134a ausgebildet. Die Rückenlehne bildet einen Aufbewahrungsbereich 136a aus. Der Aufbewahrungsbereich 136a ist als eine hohe Literaturtasche ausgebildet. Der Aufbewahrungsbereich 136a ist dazu vorgesehen, dass Gegenstände, wie insbesondere Literatur, darin angeordnet werden können. Der Aufbewahrungsbereich 136a ist dabei insbesondere in einem Bereich angeordnet, in den die Tischeinheit 14a an das Sitzbauteil 12a angeklappt werden kann. Die Öffnung 134a zwischen der Anbindungseinheit 28a und dem Sitzbauteil 12a ist als eine Befüllungsöffnung des Aufbewahrungsbereichs 136a ausgebildet, durch die Gegenstände, wie insbesondere Literatur, in den Aufbewahrungsbereich 136a eingebracht werden oder aus diesem herausgenommen werden können.

Die Anbindungseinheit 28a ist dazu vorgesehen, dass die Tischeinheit 14a in ihrer Verstaustellung an der Anbindungseinheit 28a anbindbar ist. Die Anbindungseinheit 28a ist oberhalb der Tischeinheit 14a angeordnet. Die Anbindungseinheit 28a ist in der Verstaustellung der Tischeinheit 14a oberhalb der Tischeinheit 14a angeordnet. Ein oberes Ende der Tischeinheit 14a grenzt in der Verstaustellung an ein unteres Ende der Anbindungseinheit 28a an. Eine Unterkante der Anbindungseinheit 28a ist in der Verstaustellung der Tischeinheit 14a zumindest im Wesentlichen deckungsgleich mit einer Vorderkante der Tischeinheit 14a ausgebildet. Die Vorderkante der Tischeinheit 14a ist in der Verstaustellung der Unterkante der Anbindungseinheit 28a zugewandt. In der Verstaustellung der Tischeinheit 14a ist ein Übergang zwischen der Tischeinheit 14a und der Anbindungseinheit 28a eben. Eine rückseitige, einem Passagier zugewandte Fläche des Grundkörpers 16a der Tischeinheit 14a geht in eine von dem Gehäuse 30a ausgebildete Oberfläche der Anbindungseinheit 28a über. In einem Übergangsbereich zwischen der Tischeinheit 14a und der Anbindungseinheit 28a ragt in der Verstaustellung der Tischeinheit 14a weder die Anbindungseinheit 28a noch die Tischeinheit 14a nach hinten über. Die Tischeinheit 14a ist in ihrer Verstaustellung an der Anbindungseinheit 28a verriegelbar. Die Tischeinheit 14a ist über die mit dem Sitzbauteil 12a fest verbundene Anbindungseinheit 28a fest mit dem Sitzbauteil 12a verriegelbar.

Das Verriegelmodul 20a umfasst zwei Formschlusselemente 34a, 36a. Die Formschlusselemente 34a, 36a sind zur formschlüssigen Anbindung der Tischeinheit 14a an die Anbindungseinheit 28a vorgesehen. Mittels der Formschlusselemente 34a, 36a ist die Tischeinheit 14a in dem verriegelten Zustand mit der Anbindungseinheit 28a formschlüssig gekoppelt. Die Formschlusselemente 34a, 36a sind in äußeren Randbereichen 22a, 24a der Anbindungseinheit 28a angeordnet, die jeweils mit einem der äußeren Randbereiche 22a, 24a der Tischeinheit 14a deckungsgleich angeordnet sind. Die Formschlusselemente 34a, 36a sind als Stiftelemente ausgebildet. Die als Stiftelemente ausgebildeten Formschlusselemente 34a, 36a weisen dabei eine längliche Erstreckung auf. Grundsätzlich ist es auch denkbar, dass die Formschlusselemente 34a, 36a auf eine andere, dem Fachmann als sinnvoll erscheinende Weise, beispielsweise als Hakenelemente, ausgebildet sind. Die Formschlusselemente 34a, 36a sind in der Anbindungseinheit 28a angeordnet. Die Formschlusselemente 34a, 36a sind in Aufnahmebereichen der Anbindungseinheit 28a beweglich gelagert. Die Formschlusselemente 34a, 36a sind in dem von der Anbindungseinheit 28a ausgebildeten Innenraum 32a gelagert. Die Aufnahmebereiche, in denen die Formschlusselemente 34a, 36a beweglich gelagert sind, sind von dem Grundkörper 16a in dem Innenraum 32a der Anbindungseinheit 28a ausgebildet. Die Formschlusselemente 34a, 36a sind axial beweglich in der Anbindungseinheit 28a gelagert. Die Aufnahmebereiche für die Formschlusselemente 34a, 36a bilden dazu Längsführungen aus. Die Formschlusselemente 34a, 36a sind jeweils entlang einer Verschiebeachse axial verschiebbar. Die Verschiebeachsen beider Formschlusselemente 34a. 36 verlaufen dabei parallel zueinander. Grundsätzlich ist es auch denkbar, dass die Verschiebeachsen beider Formschlusselemente 34a, 36a zueinander verkippt sind. Die Verschiebeachsen, in denen die Formschlusselemente 34a, 36a axial verschiebbar sind, sind im Wesentlichen in einer Vertikalrichtung ausgerichtet. Die Formschlusselemente 34a, 36a sind an dem unteren Ende der Anbindungseinheit 28a angeordnet. Die Formschlusselemente 34a. 36 sind zwischen einer Freigabestellung und einer Verriegelstellung in der Anbindungseinheit 28a verschiebbar. In der Freigabestellung sind die Formschlusselemente 34a. 36 vollständig innerhalb der Anbindungseinheit 28a angeordnet. In der Freigabestellung sind die Formschlusselemente 34a, 36a komplett in dem von dem Gehäuse 30a aufgespannten Innenraum 32a angeordnet. Die Formschlusselemente 34a, 36a kontaktieren die Tischeinheit 14a in ihrer Freigabestellung nicht. In der Freigabestellung der Formschlusselemente 34a, 36a ist das Verriegelmodul 20a in seinem entriegelten Zustand. Grundsätzlich ist es auch denkbar, dass die Formschlusselemente 34a, 36a in ihrer Freigabestellung unwesentlich aus der Anbindungseinheit 28a herausragen, wobei die Formschlusselemente 34a, 36a die Tischeinheit 14a nicht kontaktieren können. In der Verriegelstellung ragen die Formschlusselemente 34a, 36a an dem unteren Ende aus dem Gehäuse 30a der Anbindungseinheit 28a heraus. In der Verriegelstellung ragen die Formschlusselemente 34a, 36a mit einem Formschlussbereich in einen Kontaktbereich der Tischeinheit 14a hinein. In der Verriegelstellung ragen die Formschlusselemente 34a, 36a so weit aus der Anbindungseinheit 28a nach unten heraus, dass die Formschlusselemente 34a, 36a in einen formschlüssigen Kontakt mit der Tischeinheit 14a treten können. Ist die Tischeinheit 14a in ihrer Verstaustellung angeordnet, können die Formschlusselemente 34a, 36a aus ihrer Freigabestellung so in die Verriegelstellung bewegt werden, dass sie formschlüssig in die Tischeinheit 14a eingreifen.

Zur formschlüssigen Kopplung mit den in der Anbindungseinheit 28a angeordneten Formschlusselementen 34a, 36a weist das Verriegelmodul 20a zwei fest mit der Tischeinheit 14a verbundene Formschlusselemente 38a, 40a auf. Die Formschlusselemente 38a, 40a der Tischeinheit 14a sind korrespondierend zu den Formschlusselementen 34a, 36a der Anbindungseinheit 28a ausgebildet. Die Formschlusselemente 38a, 40a der Tischeinheit 14a sind als Ausnehmungen in dem Grundkörper 16a der Tischeinheit 14a ausgebildet. Die als Ausnehmungen ausgebildeten Formschlusselemente 38a, 40a der Tischeinheit 14a sind in die vordere Kante der Tischeinheit 14a eingebracht. Die als Ausnehmungen ausgebildeten Formschlusselemente 38a, 40a der Tischeinheit 14a sind in den äußeren Randbereichen 22a, 24a der Tischeinheit 14a angeordnet. In der Verstaustellung der Tischeinheit 14a sind die als Ausnehmungen ausgebildeten Formschlusselemente 38a, 40a der Tischeinheit 14a deckungsgleich mit den als Stiftelementen ausgebildeten Formschlusselementen 34a, 36a der Anbindungseinheit 28a ausgerichtet. In der Verstaustellung der Tischeinheit 14a können die als Stiftelemente ausgebildeten Formschlusselemente 34a, 36a der Anbindungseinheit 28a von ihrer Freigabestellung in die Verriegelstellung bewegt werden, in der sie dann in die als Ausnehmungen ausgebildeten Formschlusselemente 38a, 40a der Tischeinheit 14a formschlüssig eingreifen. Greifen die als Stiftelemente ausgebildeten Formschlusselemente 34a, 36a der Anbindungseinheit 28a formschlüssig in die als Ausnehmungen ausgebildeten Formschlusselemente 38a, 40a der Tischeinheit 14a ein, ist die Tischeinheit 14a in den äußeren Randbereichen 22a, 24a fest mit der Anbindungseinheit 28a und damit dem Sitzbauteil 12a gekoppelt.

Das Verriegelmodul 20a umfasst einen Betätigungsmechanismus 42a. Der Betätigungsmechanismus 42a ist dazu vorgesehen, die beweglich gelagerten Formschlusselemente 34a, 36a zu betätigen. Der Betätigungsmechanismus 42a ist dazu vorgesehen, die Formschlusselemente 34a, 36a zwischen ihrer Freigabestellung und ihrer Verriegelstellung zu verstellen. Der Betätigungsmechanismus 42a ist in der Anbindungseinheit 28a angeordnet. Der Betätigungsmechanismus 42a ist dazu vorgesehen, eine auf ihn ausgeübte Betätigungsbewegung an die beiden Formschlusselemente 34a, 36a weiterzuleiten, um diese zu betätigen, insbesondere um diese von ihrer Freigabestellung in ihre Verriegelstellung zu bewegen. Der Betätigungsmechanismus 42a weist eine unbetätigte Stellung und eine betätigte Stellung auf. In der unbetätigten Stellung des Betätigungsmechanismus 42a sind die Formschlusselemente 34a, 36a in ihrer Freigabestellung angeordnet. Der Betätigungsmechanismus 42a ist in der unbetätigten Stellung dazu vorgesehen, die Formschlusselemente 34a, 36a selbsttätig in ihre Freigabestellung zu bewegen.

Zur Aufnahme einer Betätigungsbewegung weist der Betätigungsmechanismus 42a ein Aufnahmeelement 48a auf. Das Aufnahmeelement 48a ist als ein axial verschiebbarer Hebel ausgebildet. Das Aufnahmeelement 48a ist, in einer Querrichtung gesehen, mittig in der Anbindungseinheit 28a angeordnet. Das Aufnahmeelement 48a ist in einem Mittelbereich der Anbindungseinheit 28a angeordnet. Das Aufnahmeelement 48a ist als ein T-förmiges Element ausgebildet. Mit einem axialen Mittelbereich ist das Aufnahmeelement 48a in einer von dem Gehäuse 30a der Anbindungseinheit 28a ausgebildeten Führungsnut axial geführt. In der Führungsnut ist das Aufnahmeelement 48a axial verschiebbar gelagert. Das Aufnahmeelement 48a ist in einer Axialrichtung verschiebbar gelagert, die parallel zu der Vertikalrichtung ausgerichtet ist. Die Axialrichtung, in der das Aufnahmeelement 48a verschiebbar ist, ist parallel zu den Verschiebachsen der Formschlusselemente 34a, 36a ausgerichtet. An einem unteren Ende, das zumindest teilweise aus einem Innenraum 32a des Gehäuses 30a herausragt, weist das Aufnahmeelement 48a einen breiten Betätigungsbereich 50a auf. Über den Betätigungsbereich 50a kann eine Betätigungsbewegung in den Betätigungsmechanismus 42a eingeleitet werden. Zu einer Verstellung des Betätigungsmechanismus 42a ist das Aufnahmeelement 48a dazu vorgesehen, nach oben, von einem unteren Ende der Anbindungseinheit 28a wegbewegt zu werden.

Der Betätigungsmechanismus 42a weist ein erstes Koppelelement 52a und ein zweites Koppelelement 54a auf. Die Koppelelemente 52a, 54a sind dazu vorgesehen, eine Betätigungsbewegung des Aufnahmeelements 48a jeweils auf ein Formschlusselement 34a, 36a zu übertragen. Die Koppelelemente 52a, 54a sind als Hebelelemente ausgebildet, die in dem Innenraum 32a des Gehäuses 30a der Anbindungseinheit 28a angeordnet sind. Die als Hebelelemente ausgebildeten Koppelelemente 52a, 54a sind dabei plattenartig ausgebildet. Die Koppelelemente 52a, 54a sind jeweils über eine Schwenkachse 56a, 58a verschwenkbar in dem Innenraum 32a des Gehäuses 30a gelagert. Die Schwenkachsen 56a, 58a sind in einem unteren Bereich der Koppelelemente 52a, 54a angeordnet. Die Koppelelemente 52a, 54a weisen jeweils ein erstes Ende auf. Die Koppelelemente 52a, 54a sind mit ihren ersten Enden einander zugewandt. Die Koppelelemente 52a, 54a sind mit ihren ersten Enden in dem Mittelbereich der Anbindungseinheit 28a angeordnet. Die Koppelelemente 52a, 54a sind dazu vorgesehen, bei einer Betätigung des Aufnahmeelements 48a mit ihren ersten Enden in Kontakt mit dem Aufnahmeelement 48a zu kommen und von diesem ausgelenkt zu werden. Die ersten Enden der Koppelelemente 52a, 54a werden dabei von dem Aufnahmeelement 48a nach oben, von dem unteren Bereich der Anbindungseinheit 28a weggedrückt. Die Koppelelemente 52a, 54a weisen jeweils ein zweites Ende auf, das dem jeweils ersten Ende des Koppelelements 52a, 54a gegenüberliegt. Die zweiten Enden der Koppelelemente 52a, 54a sind jeweils in einem der Randbereiche der Anbindungseinheit 28a angeordnet. Die zweiten Enden der Koppelelemente 52a, 54a sind jeweils einem der Formschlusselementen 34a, 36a zugewandt. Das erste Koppelelement 52a ist mit seinem zweiten Ende mit dem einen Formschlusselement 34a gekoppelt. Eine Bewegung des Koppelelements 52a wird auf das Formschlusselement 34a übertragen. Das zweite Koppelelement 54a ist mit seinem zweiten Ende mit dem anderen Formschlusselement 36a gekoppelt. Eine Bewegung des Koppelelements 54a wird auf das Formschlusselement 36a übertragen. Bei einer Verstellung des Betätigungsmechanismus 42a von der unbetätigten Stellung in die betätigte Stellung wird das Aufnahmeelement 48a nach oben bewegt und lenkt die Koppelelemente 52a, 54a mit ihrem ersten Ende nach oben aus, wodurch diese mit ihrem zweiten Ende, an das jeweils ein Formschlusselement 34a, 36a angebunden ist, nach unten geschwenkt werden, wodurch die Formschlusselemente 34a, 36a aus ihrer Freigabestellung nach unten in Richtung der Tischeinheit 14a in ihre Verriegelstellung gedrückt werden.

Zur selbststätigen Verstellung der Formschlusselemente 34a, 36a in ihre Freigabestellung ist der Betätigungsmechanismus 42a dazu vorgesehen, die Koppelelemente 52a, 54a in ihrer Neutralstellung zu fixieren, wenn sie nicht von dem Aufnahmeelement 48a ausgelenkt werden. Dazu weist der Betätigungsmechanismus 42a ein Federelement 44a auf. Das Federelement 44a ist zwischen den beiden Koppelelementen 52a, 54a angeordnet.

Das Federelement 44a ist als eine Zugfeder ausgebildet, die die Koppelelemente 52a, 54a mit ihren Anbindungspunkten, an denen das Federelement 44a jeweils angebunden ist, zueinander zieht. Das Federelement 44a ist dazu vorgesehen, die Koppelelemente 52a, 54a in eine Stellung zu ziehen, in der die Formschlusselemente 34a, 36a in ihrer Freigabestellung angeordnet sind. In der betätigten Stellung des Betätigungsmechanismus 42a sind die Formschlusselemente 34a, 36a in ihre Verriegelstellung verstellt. Bei einer Verstellung des Betätigungsmechanismus 42a von seiner unbetätigten Stellung in seine betätigte Stellung ist der Betätigungsmechanismus 42a dazu vorgesehen, die Formschlusselemente 34a, 36a von ihrer Freigabestellung in ihre Verriegelstellung auszulenken. Dabei ist der Betätigungsmechanismus 42a dazu vorgesehen, die Formschlusselemente 34a, 36a gegen die Federkraft des Federelements 44a auszulenken. Bei einer Verstellung des Betätigungsmechanismus 42a von der unbetätigten Stellung in die betätigte Stellung wird das Aufnahmeelement 48a nach oben bewegt und lenkt die Koppelelemente 52a, 54a mit ihrem ersten Ende nach oben aus, wodurch diese mit ihrem zweiten Ende, an das jeweils ein Formschlusselement 34a, 36a angebunden ist, nach unten geschwenkt werden, wodurch die Formschlusselemente 34a, 36a gegen die Federkraft des Federelementes 44a aus ihrer Freigabestellung nach unten in Richtung der Tischeinheit 14a in ihre Verriegelstellung gedrückt werden.

Der Betätigungsmechanismus 42a ist in der unbetätigten Stellung dazu vorgesehen, die Formschlusselemente 34a, 36a selbsttätig in ihre Freigabestellung zu bewegen. Grundsätzlich ist es auch denkbar, dass der Betätigungsmechanismus 42a zur selbsttätigen Verstellung der Formschlusselemente 34a, 36a in ihre Freigabestellung pro Formschlusselement 34a, 36a je ein Federelement aufweist. Die Federelemente wären dabei in den Aufnahmebereichen, in denen die Formschlusselemente 34a, 36a gelagert sind, angeordnet und würden jeweils eine Federkraft auf ein Formschlusselement 34a, 36a ausüben, die das entsprechende Formschlusselement 34a, 36a in seine Freigabestellung drückt. Die Federelemente wären dabei als Druckfedern ausgebildet. Die Federelemente wären dabei insbesondere als Spiralfedern ausgebildet. Grundsätzlich ist es auch denkbar, dass die Federelemente als andere, dem Fachmann als sinnvoll erscheinende Federn ausgebildet sind. Wenn an jedes Formschlusselement 34a, 36a ein Federelement angebunden wäre, wäre es ebenso denkbar, dass eine Übertragung der Bewegung von den Koppelelementen 52a, 54a auf die Formschlusselemente 34a, 36a über einen Reibschluss erfolgt und nicht über eine schwenkbare Kopplung. Grundsätzlich ist es ebenso denkbar, dass der Betätigungsmechanismus 42a auf eine andere, dem Fachmann als sinnvoll erscheinende Weise ausgebildet ist und beispielsweise ein Getriebe aufweist, das beispielsweise mehrere miteinander kämmende Zahnradelemente oder Hebel aufweist.

Das Verriegelmodul 20a umfasst ein Betätigungselement 60a. Das Betätigungselement 60a ist zur händischen Bedienung durch einen Passagier vorgesehen. Das Betätigungselement 60a ist dazu vorgesehen, das Verriegelmodul 20a zwischen seiner entriegelten Stellung und seiner verriegelten Stellung zu verstellen. Ein Bediener, insbesondere ein Passagier, kann das Verriegelmodul 20a durch händische Betätigung des Betätigungselements 60a zwischen der verriegelten Stellung und der entriegelten Stellung verstellen. Dadurch kann der Passagier durch Betätigung des Betätigungselements 60a die Tischeinheit 14a wahlweise in ihrer Verstaustellung an dem Sitzbauteil 12a fixieren oder freigeben und dann in ihre Gebrauchsstellung bewegen. Ein Bediener kann das Betätigungselement 60a händisch zwischen einer Betätigungsstellung und einer Nicht-Betätigungsstellung verstellen. In einer Betätigungsstellung betätigt das Betätigungselement 60a den Betätigungsmechanismus 42a in seine betätigte Stellung, wenn die Tischeinheit 14a in ihrer Verstaustellung angeordnet ist. Ist das Betätigungselement 60a in seiner Nicht-Betätigungsstellung angeordnet, betätigt es den Betätigungsmechanismus 42a und dieser ist in seiner unbetätigten Stellung angeordnet. Das Betätigungselement 60a ist als ein Drehelement ausgebildet. Das als Drehelement ausgebildete Betätigungselement 60a ist über ein Drehlager an die Tischeinheit 14a angebunden. Das Betätigungselement 60a kann durch Drehen um eine von dem Drehlager ausgebildete Drehachse zwischen der Betätigungsstellung und der Nicht-Betätigungsstellung verdreht werden. Das Betätigungselement 60a ist an der Tischeinheit 14a angebunden. Das Betätigungselement 60a ist auf einer der Tischfläche 18a gegenüberliegenden Rückseite der Tischeinheit 14a angeordnet. Das Betätigungselement 60a ist in einem vorderen Bereich der Tischeinheit 14a angeordnet. Das Betätigungselement 60a ist mittig an der Tischeinheit 14a angebunden.

Das Betätigungselement 60a weist ein Formschlusselement 62a auf. Das Formschlusselement 62a ist dazu vorgesehen, formschlüssig mit der Anbindungseinheit 28a verbunden zu werden. In der Betätigungsstellung des Betätigungselements 60a ist das Formschlusselement 62a formschlüssig mit der Anbindungseinheit 28a verbunden. Das Formschlusselement 62a kann dabei mit der Anbindungseinheit 28a in einen formschlüssigen Kontakt gebracht werden, wenn die Tischeinheit 14a in ihrer Verstaustellung angeordnet ist. Das Formschlusselement 62a ist an einem vorderen Ende des Betätigungselements 60a angeordnet. Das Formschlusselement 62a ist als ein Hakenelement ausgebildet. Das als Hakenelement ausgebildete Formschlusselement 62a ist dazu vorgesehen, bei einer Verstellung des Betätigungselements 60a von der Nicht-Betätigungsstellung in die Betätigungsstellung in einen formschlüssigen Eingriff mit der Anbindungseinheit 28a zu kommen, wenn die Tischeinheit 14a in ihrer Verstaustellung angeordnet ist. Zur formschlüssigen Kopplung mit dem Formschlusselement 62a des Betätigungselements 60a weist die Anbindungseinheit 28a ein korrespondierend ausgebildetes Formschlusselement 64a auf. Das Formschlusselement 64a ist als ein Hinterschnitt ausgebildet, der korrespondierend zu dem als Hakenelement ausgebildeten Formschlusselement 62a ausgebildet ist. Das als Hinterschnitt ausgebildete Formschlusselement 64a weist eine gekrümmte Führungsbahn auf.

Das Betätigungselement 60a ist bei einer Kopplung mit der Anbindungseinheit 28a dazu vorgesehen, den Betätigungsmechanismus 42a zu betätigen. Das Betätigungselement 60a bildet an seiner Oberseite einen Kontaktbereich 66a aus. Der Kontaktbereich 66a ist dazu vorgesehen, bei einer Kopplung des Betätigungselements 60a mit der Anbindungseinheit 28a mit dem Betätigungsbereich 50a des Aufnahmeelements 48a des Betätigungsmechanismus 42a zu kontaktieren. Bei der Kopplung betätigt das Betätigungselement 60a mit seinem Kontaktbereich 66a das Aufnahmeelement 48a und verschiebt dieses axial. Das Betätigungselement 60a übt eine Betätigungsbewegung auf den Betätigungsmechanismus 42a aus. Durch eine Verstellung des Betätigungselements 60a von seiner Nicht-Betätigungsstellung in seine Betätigungsstellung, während sich die Tischeinheit 14a in ihrer Verstaustellung befindet, greift das Formschlusselement 62a des Betätigungselements 60a formschlüssig in das korrespondierende Formschlusselement 64a der Anbindungseinheit 28a ein und verriegelt die Tischeinheit 14a so mittig mit der Anbindungseinheit 28a, und die Formschlusselemente 34a, 36a der Anbindungseinheit 28a werden zeitgleich, durch die Betätigung des Betätigungsmechanismus 42a mittels des Kontaktbereichs 66a des Betätigungselements 60a, mit den korrespondierend ausgebildeten Formschlusselementen 38a, 40a der Tischeinheit 14a in einen formschlüssigen Kontakt gebracht und verriegeln die Tischeinheit 14a dadurch in den Randbereichen 22a, 24a mit der Anbindungseinheit 28a. Dadurch kann die Tischeinheit 14a durch die Verstellung des einen Betätigungselements 60a von seiner Nicht-Betätigungsstellung in seine Betätigungsstellung, wenn die Tischeinheit 14a in ihrer Verstaustellung angeordnet ist, vorteilhaft in einem Mittelbereich 26a und in den beiden Randbereichen 22a, 24a formschlüssig mit der Anbindungseinheit 28a verriegelt werden. Dadurch kann besonders einfach eine besonders vorteilhafte und stabile Verbindung zwischen der Tischeinheit 14a und der Anbindungseinheit 28a, und dadurch auch zwischen der Tischeinheit 14a und dem Sitzbauteil 12a, erreicht werden.

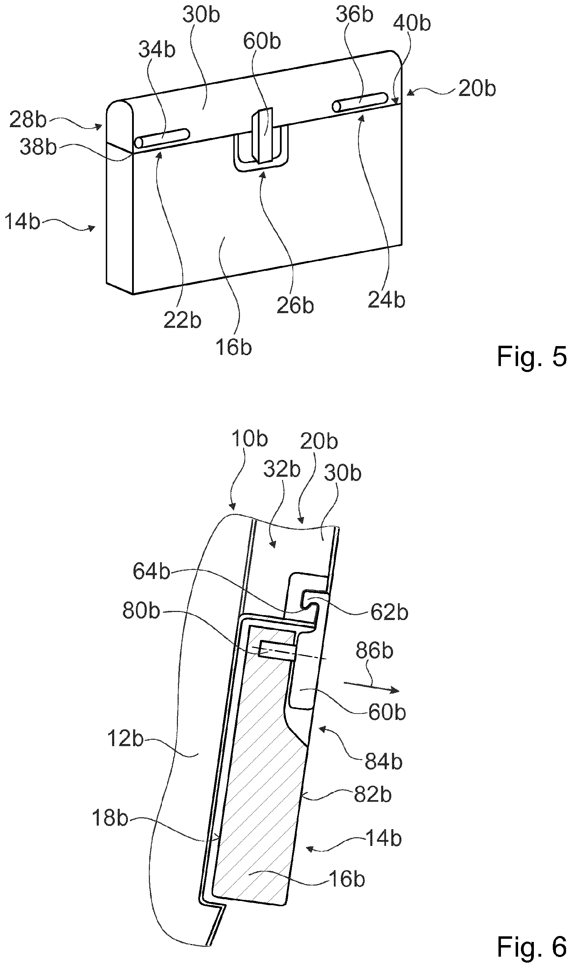

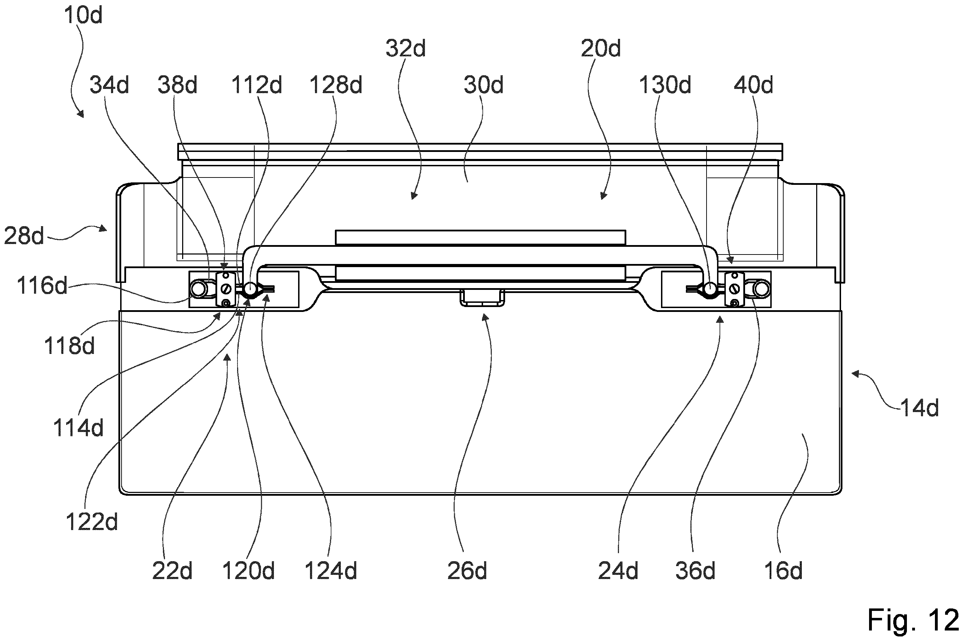

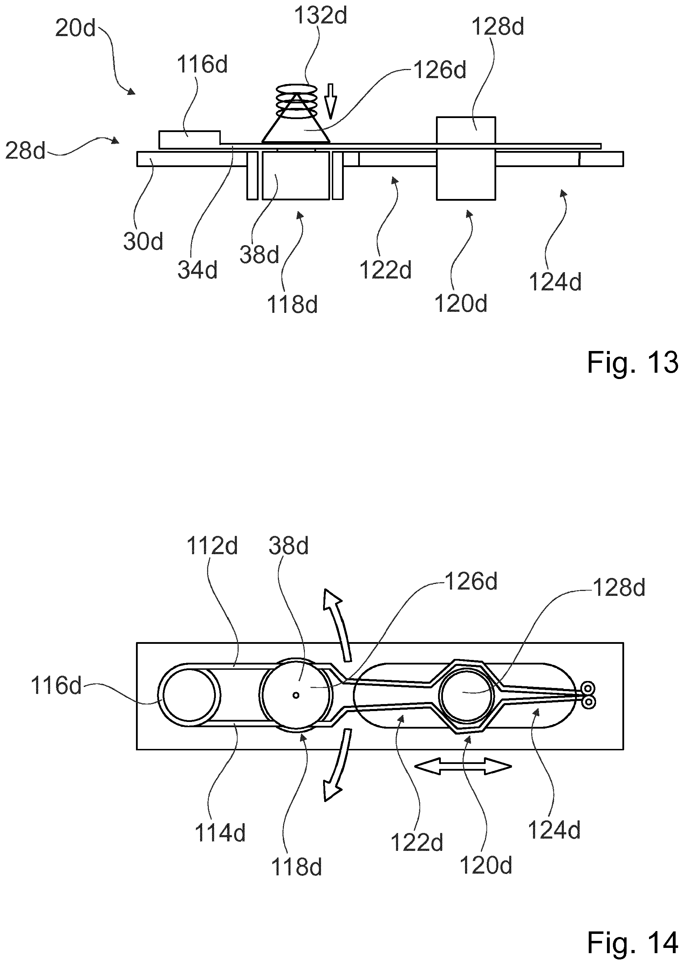

In den Figuren 5 bis 18 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Figuren 5 bis 18 ist der Buchstabe a durch die Buchstaben b bis f ersetzt.

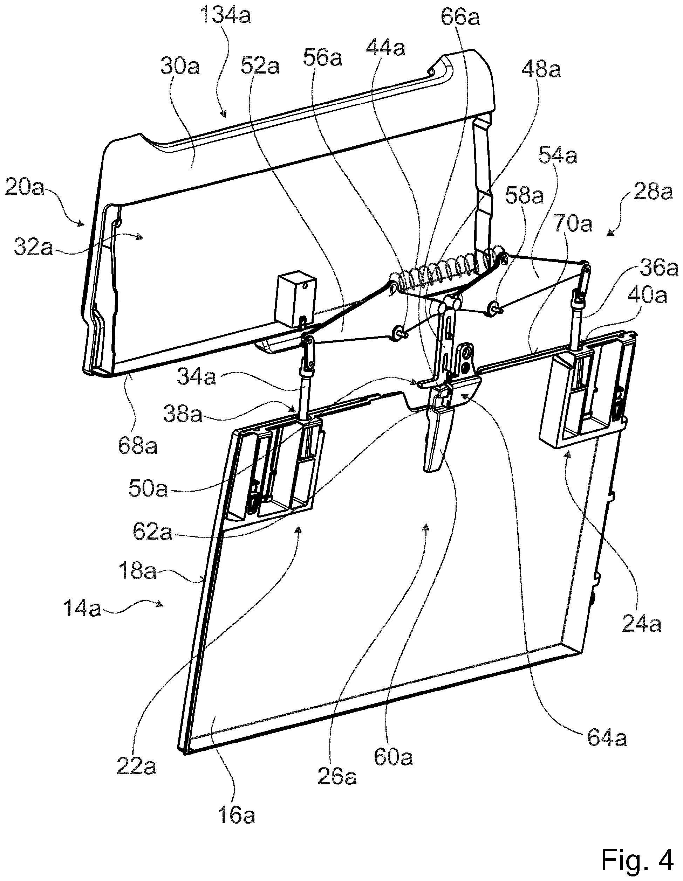

Die Figuren 4 bis 6 zeigen eine Tischvorrichtung für einen Sitz 10b in einem zweiten Ausführungsbeispiel. Der Sitz 10b weist ein Sitzbauteil 12b auf. Das Sitzbauteil 12b ist als eine Rückenlehne ausgebildet. Die Tischvorrichtung umfasst eine Tischeinheit 14b. Die Tischeinheit 14b ist von einem Grundkörper 16b ausgebildet. Der Grundkörper 16b bildet einen Tischgrundkörper aus. Die Tischeinheit 14b weist eine Tischfläche 18b auf. Die Tischfläche 18b ist als eine Oberfläche des Grundkörpers 16b ausgebildet. Die Tischeinheit 14b ist über eine Schwenklagerung mit dem Sitz 10b gekoppelt. Die Tischeinheit 14b ist zwischen einer Verstaustellung und einer Gebrauchsstellung verstellbar. Die Tischeinheit 14b ist insbesondere über ein Lagermodul zwischen der Gebrauchsstellung und der Verstaustellung verschwenkbar. In der Gebrauchsstellung ist die Tischeinheit 14b mit einer Tischfläche 18b der Tischeinheit 14b im Wesentlichen parallel zu einer Aufständerebene ausgerichtet. In der Verstaustellung ist die Tischeinheit 14b an das Sitzbauteil 12b angeklappt und kann nicht zum Abstellen von Gegenständen genutzt werden.

Die Tischvorrichtung umfasst ein Verriegelmodul 20b. Das Verriegelmodul 20b ist dazu vorgesehen, die Tischeinheit 14b in ihrer Verstaustellung an dem Sitzbauteil 12b zu fixieren. Das Verriegelmodul 20b weist einen verriegelten Zustand auf, in dem das Verriegelmodul 20b die Tischeinheit 14b in ihrer Verstaustellung verriegelt. Das Verriegelmodul 20b weist einen entriegelten Zustand auf, in dem das Verriegelmodul 20b die Tischeinheit 14b freigibt, sodass diese aus der Verstaustellung herausbewegt werden kann. Das Verriegelmodul 20b ist insbesondere dazu vorgesehen, die Tischeinheit 14b in zwei gegenüberliegenden Randbereichen 22b, 24b mit dem Sitzbauteil 12b zu koppeln. Das Verriegelmodul 20b ist dazu vorgesehen, die Tischeinheit 14b zusätzlich in einem Mittelbereich 26b mit dem Sitzbauteil 12b zu koppeln. Mittels des Verriegelmoduls 20b ist die Tischeinheit 14b an drei Positionen fest mit dem Sitzbauteil 12b gekoppelt. Dadurch kann eine besonders stabile Fixierung der Tischeinheit 14b an dem Sitzbauteil 12b erreicht werden.

Das Verriegelmodul 20b weist eine Anbindungseinheit 28b auf. Die Anbindungseinheit 28b ist fest mit dem Sitzbauteil 12b verbunden. Die Anbindungseinheit 28b weist ein Gehäuse 30b auf. Das Gehäuse 30b ist von einem Grundkörper gebildet. Das Gehäuse 30b spannt einen Innenraum 32b auf. Der Innenraum 32b des Gehäuses 30b der Anbindungseinheit 28b ist dazu vorgesehen, dass Bauteile des Verriegelmoduls 20b darin angeordnet und/oder gelagert sind. Die Anbindungseinheit 28b ist starr mit dem Sitzbauteil 12b verbunden. Das Gehäuse 30b der Anbindungseinheit 28b ist fest mit dem Sitzbauteil 12b verbunden. Das Gehäuse 30b der Anbindungseinheit 28b ist insbesondere mit einer tragenden Struktur des Sitzbauteils 12b verbunden.

Die Anbindungseinheit 28b ist dazu vorgesehen, dass die Tischeinheit 14b in ihrer Verstaustellung an der Anbindungseinheit 28b anbindbar ist. Die Anbindungseinheit 28b ist oberhalb der Tischeinheit 14b angeordnet. Die Anbindungseinheit 28b ist in der Verstaustellung der Tischeinheit 14b oberhalb der Tischeinheit 14b angeordnet. Ein oberes Ende der Tischeinheit 14b grenzt in der Verstaustellung an ein unteres Ende der Anbindungseinheit 28b an. Eine Unterkante 68b der Anbindungseinheit 28b ist in der Verstaustellung der Tischeinheit 14b deckungsgleich mit einer Vorderkante 70b der Tischeinheit 14b ausgebildet. Die Vorderkante der Tischeinheit 14b ist in der Verstaustellung der Unterkante der Anbindungseinheit 28b zugewandt. In der Verstaustellung der Tischeinheit 14b ist ein Übergang zwischen der Tischeinheit 14b und der Anbindungseinheit 28b eben.

Das Verriegelmodul 20b umfasst zwei Kraftschlusselemente 34b, 36b. Die Kraftschlusselemente 34b, 36b sind zur kraftschlüssigen Anbindung der Tischeinheit 14b an die Anbindungseinheit 28b vorgesehen. Mittels der Kraftschlusselemente 34b, 36b ist die Tischeinheit 14b in dem verriegelten Zustand mit der Anbindungseinheit 28b kraftschlüssig gekoppelt. Die Kraftschlusselemente 34b, 36b sind in äußeren Randbereichen der Anbindungseinheit 28b angeordnet, die jeweils mit einem der äußeren Randbereiche 22b, 24b der Tischeinheit 14b deckungsgleich angeordnet sind. Die Kraftschlusselemente 34b, 36b sind als Nocken ausgebildet, die zur Verriegelung der Tischeinheit 14b dazu vorgesehen sind, die Tischeinheit 14b über einen Reibschluss zu fixieren. Die als Nocken ausgebildeten Kraftschlusselemente 34b, 36b weisen jeweils eine Reibschlussfläche 72b auf. Die Reibschlussflächen 72b der als Nocken ausgebildeten Kraftschlusselemente 34b, 36b weisen einen abgerundeten Verlauf aus. Dabei ist es denkbar, dass die Reibschlussflächen 72b einen gleichmäßig gekrümmten Verlauf aufweisen oder dass die Reibschlussflächen 72b in unterschiedlichen Teilbereichen unterschiedlich stark gekrümmte Verläufe aufweisen. Die Reibschlussflächen 72b weisen einen Haupthaltebereich auf, der in einer Verstaustellung der Tischeinheit 14b in einem verriegelten Zustand des Verriegelmoduls 20b im Wesentlichen einen Reibkontakt mit der Tischeinheit 14b ausbildet. Der Haupthaltebereich der Reibschlussflächen 72b kann dabei abgeflacht ausgebildet sein. Dadurch kann in dem verriegelten Zustand ein besonders vorteilhaft großer Bereich bereitgestellt werden, in dem die Reibschlussflächen 72b der als Nocken ausgebildeten Kraftschlusselemente 34b, 36b in einem Reibkontakt mit der Tischeinheit 14b stehen. Die Kraftschlusselemente 34b, 36b weisen an ihren Reibschlussflächen 72b eine spezielle Beschichtung auf, die einen besonders vorteilhaft hohen Reibungskoeffizienten aufweist, sodass eine Haltekraft, die durch einen Reibschluss zwischen den Kraftschlusselementen 34b, 36b und der Tischeinheit 14b gebildet ist, besonders hoch ist.

Die als Nocken ausgebildeten Kraftschlusselemente 34b, 36b sind in dem unteren Bereich der Anbindungseinheit 28b angeordnet. Die Kraftschlusselemente 34b, 36b sind in einem unteren Bereich des Gehäuses 30b der Anbindungseinheit 28b gelagert. Die Kraftschlusselemente 34b, 36b ragen teilweise über die Unterkante 68b der Anbindungseinheit 28b hinaus. Die Kraftschlusselemente 34b, 36b ragen insbesondere mit ihren Reibschlussflächen 72b über die Unterkante 68b der Anbindungseinheit 28b hinaus. Die als Nocken ausgebildeten Kraftschlusselemente 34b, 36b sind verschwenkbar in der Anbindungseinheit 28b gelagert. Die Kraftschlusselemente 34b, 36b sind über ein Schwenklager 74b verschwenkbar in dem Gehäuse 30b der Anbindungseinheit 28b gelagert. Die Kraftschlusselemente 34b, 36b sind exzentrisch verschwenkbar gelagert. Die Schwenklager 74b sind in einem vorderen Bereich der Kraftschlusselemente 34b, 36b angeordnet. Dadurch können die Kraftschlusselemente 34b, 36b mit einem hinteren Ende, das einer Frontseite 76b der Anbindungseinheit 28b abgewandt ist, bei einer entsprechend auf die Kraftschlusselemente 34b, 36b wirkenden Kraft nach unten verschwenkt werden. Durch eine exzentrische Verschwenkung der Kraftschlusselemente 34b, 36b kann vorteilhaft ein mit der Tischeinheit 14b in einem Reibkontakt stehender Bereich der Reibschlussfläche 72b verändert werden und dadurch insbesondere eine Haltekraft verändert, insbesondere erhöht werden. Das Verriegelmodul 20b weist je Kraftschlusselement 34b, 36b jeweils ein Federelement 78b auf. Die Federelemente 78b üben eine Federkraft auf die Kraftschlusselemente 34b, 36b aus, die nach unten, insbesondere in Richtung der Tischeinheit 14b, ausgerichtet ist. Die Federelemente 78b sind als Druckfedern ausgebildet. Die Federelemente 78b sind in dem Gehäuse 30b angeordnet. Die Federelemente 78b stützen sich jeweils zwischen dem Gehäuse 30b und dem entsprechenden Kraftschlusselement 34b, 36b ab. Die Federelemente 78b greifen dabei an dem hinteren Ende der Kraftschlusselemente 34b, 36b an. Die Federelemente 78b sind dazu vorgesehen, die Kraftschlusselemente 34b, 36b mit ihren hinteren Enden jeweils in Richtung der Tischeinheit 14b zu drücken. Die Federelemente 78b sind dazu vorgesehen, eine Anpresskraft, also eine Normalkraft zwischen den Kraftschlusselementen 34b, 36b und der Tischeinheit 14b, zu erhöhen, um eine vorteilhaft hohe Haltekraft zwischen den Kraftschlusselementen 34b, 36b und der Tischeinheit 14b zu erreichen.

Zur kraftschlüssigen Kopplung mit den in der Anbindungseinheit 28b angeordneten Kraftschlusselementen 34b, 36b weist das Verriegelmodul 20b zwei fest mit der Tischeinheit 14b verbundene Kraftschlusselemente 38b, 40b auf. Die Kraftschlusselemente 38b, 40b der Tischeinheit 14b sind korrespondierend zu den Kraftschlusselementen 34b, 36b der Anbindungseinheit 28b ausgebildet. Die Kraftschlusselemente 38b, 40b der Tischeinheit 14b sind als Reibflächen auf dem Grundkörper 16b der Tischeinheit 14b ausgebildet. Die als Reibflächen ausgebildeten Kraftschlusselemente 38b, 40b der Tischeinheit 14b sind auf der Vorderkante der Tischeinheit 14b angebracht. Die als Reibflächen ausgebildeten Kraftschlusselemente 38b, 40b der Tischeinheit 14b sind in den äußeren Randbereichen 22b, 24b der Tischeinheit 14b angeordnet. In der Verstaustellung der Tischeinheit 14b sind die als Reibflächen ausgebildeten Kraftschlusselemente 38b, 40b der Tischeinheit 14b deckungsgleich mit den als Nocken ausgebildeten Kraftschlusselementen 34b, 36b der Anbindungseinheit 28b ausgerichtet. In der Verstaustellung der Tischeinheit 14b stehen die als Reibflächen ausgebildeten Kraftschlusselemente 38b, 40b der Tischeinheit 14b mit den als Nocken ausgebildeten Kraftschlusselementen 34b, 36b der Anbindungseinheit 28b in einem Reibkontakt. Die als Reibflächen ausgebildeten Kraftschlusselemente 38b, 40b der Tischeinheit 14b können dabei eine spezielle für einen Reibschluss vorgesehene Oberfläche aufweisen. Grundsätzlich ist es aber auch denkbar, dass die als Reibflächen ausgebildeten Kraftschlusselemente 38b, 40b der Tischeinheit 14b von einer gleichen Oberflächenbeschaffenheit gebildet sind wie ein Rest des Grundkörpers 16b der Tischeinheit 14b.

Das Verriegelmodul 20b umfasst ein Betätigungselement 60b. Das Betätigungselement 60b ist zur händischen Bedienung durch einen Passagier vorgesehen. Das Betätigungselement 60b ist dazu vorgesehen, das Verriegelmodul 20b zwischen seiner entriegelten Stellung und seiner verriegelten Stellung zu verstellen. Ein Bediener, insbesondere ein Passagier, kann das Verriegelmodul 20b durch händische Betätigung des Betätigungselements 60b zwischen der verriegelten Stellung und der entriegelten Stellung verstellen. Dadurch kann der Passagier durch Betätigung des Betätigungselements 60b die Tischeinheit 14b wahlweise in ihrer Verstaustellung an dem Sitzbauteil 12b fixieren oder freigeben und dann in ihre Gebrauchsstellung bewegen. Ein Bediener kann das Betätigungselement 60b händisch zwischen einer Betätigungsstellung und einer Nicht-Betätigungsstellung verstellen. Das Betätigungselement 60b ist als ein Drehelement ausgebildet. Das als Drehelement ausgebildete Betätigungselement 60b ist über ein Drehlager 80b an die Tischeinheit 14b angebunden. Das Betätigungselement 60b kann durch Drehen um eine von dem Drehlager 80b ausgebildete Drehachse zwischen der Betätigungsstellung und der Nicht-Betätigungsstellung verdreht werden. Das Betätigungselement 60b ist an der Tischeinheit 14b angebunden. Das Betätigungselement 60b ist auf einer der Tischfläche 18b gegenüberliegenden Rückseite 82b der Tischeinheit 14b angeordnet. Die Tischeinheit 14b weist an ihrer Rückseite 82b eine Ausnehmung 84b auf, in der das Betätigungselement 60b angeordnet ist. Das Betätigungselement 60b ragt in einem montierten Zustand nicht über eine Rückseite 82b der Tischeinheit 14b aus der Ausnehmung 84b heraus. Dadurch kann das Betätigungselement 60b besonders vorteilhaft angeordnet werden und es kann insbesondere eine Verletzungsgefahr durch das Betätigungselement 60b verringert werden. Das Betätigungselement 60b ist in einem vorderen Bereich der Tischeinheit 14b angeordnet. Das Betätigungselement 60b ist mittig an der Tischeinheit 14b angebunden.

Das Betätigungselement 60b weist ein Formschlusselement 62b auf. Das Formschlusselement 62b ist dazu vorgesehen, formschlüssig mit der Anbindungseinheit 28b verbunden zu werden. In der Betätigungsstellung des Betätigungselements 60b ist das Formschlusselement 62b formschlüssig mit der Anbindungseinheit 28b verbunden. Das Formschlusselement 62b ist an einem vorderen Ende des Betätigungselements 60b angeordnet. Das Formschlusselement 62b ist als ein Hakenelement ausgebildet. Zur formschlüssigen Kopplung mit dem Formschlusselement 62b des Betätigungselements 60b weist die Anbindungseinheit 28b ein korrespondierend ausgebildetes Formschlusselement 64b auf. Das Formschlusselement 64b ist als ein Hinterschnitt ausgebildet, der korrespondierend zu dem als Hakenelement ausgebildeten Formschlusselement 62b ausgebildet ist. Das als Hinterschnitt ausgebildete Formschlusselement 64b weist eine gekrümmte Führungsbahn aus. Die gekrümmte Führungsbahn des Formschlusselements 64b ist in Seitenbereichen, in denen das als Hakenelement ausgebildete Formschlusselement 62b bei einer Kopplung zuerst eingreift, näher an der Rotationsachse des Betätigungselements 60b angeordnet als in einem Mittelbereich. In der Betätigungsstellung des Betätigungselements 60b ist das Formschlusselement 62b in dem Mittelbereich des Formschlusselements 64b angeordnet.

Durch die gekrümmte Führungsbahn des Formschlusselements 64b der Anbindungseinheit 28b wird das Betätigungselement 60b bei einer Kopplung mit der Anbindungseinheit 28b relativ zu der Anbindungseinheit 28b nach oben, in Richtung der Anbindungseinheit 28b bewegt. Dadurch wird die mit dem Betätigungselement 60b gekoppelte Tischeinheit 14b relativ zu der Anbindungseinheit 28b bewegt. Das Betätigungselement 60b ist bei der Kopplung mit der Anbindungseinheit 28b dazu vorgesehen, eine Relativbewegung zwischen der Tischeinheit 14b und der Anbindungseinheit 28b auszulösen. Die Relativbewegung ist dabei insbesondere als eine Bewegung der Tischeinheit 14b in Richtung der Anbindungseinheit 28b ausgebildet. Durch die Relativbewegung der Tischeinheit 14b zu der Anbindungseinheit 28b wird ein Spalt zwischen der Tischeinheit 14b und der Anbindungseinheit 28b vorteilhaft verkleinert. Durch die Relativbewegung werden ebenfalls die von der Tischeinheit 14b ausgebildeten Kraftschlusselemente 38b, 40b vorteilhaft in Richtung der Kraftschlusselemente 34b, 36b der Anbindungseinheit 28b bewegt. Durch die Relativbewegung der Tischeinheit 14b zu der Anbindungseinheit 28b kommen die Kraftschlusselemente 34b, 36b mit ihren Reibschlussflächen 72b in Kontakt mit den Kraftschlusselementen 38b, 40b der Tischeinheit 14b. Durch die Relativbewegung der Tischeinheit 14b zu der Anbindungseinheit 28b werden die Kraftschlusselemente 38b, 40b der Tischeinheit 14b gegen die Kraftschlusselemente 34b, 36b der Anbindungseinheit 28b gedrückt. Dabei lenkt die Tischeinheit 14b über ihre Kraftschlusselemente 38b, 40b durch die Relativbewegung die Kraftschlusselemente 34b, 36b der Anbindungseinheit 28b gegen die Federkraft der Federelemente 78b nach oben aus. Die Federelemente 78b erzeugen eine Gegenkraft, die eine Normalkraft zwischen den Kraftschlusselementen 34b, 36b der Anbindungseinheit 28b und den Kraftschlusselementen 38b, 40b der Tischeinheit 14b erhöht.

Durch eine Verstellung des Betätigungselements 60b von seiner Nicht-Betätigungsstellung in seine Betätigungsstellung, während sich die Tischeinheit 14b in ihrer Verstaustellung befindet, greift das Formschlusselement 62b des Betätigungselements 60b formschlüssig in das korrespondierende Formschlusselement 64b der Anbindungseinheit 28b ein und verriegelt die Tischeinheit 14b so mittig mit der Anbindungseinheit 28b. Durch die Relativbewegung der Tischeinheit 14b zu der Anbindungseinheit 28b werden zeitgleich die Kraftschlusselemente 34b, 36b der Anbindungseinheit 28b mit den korrespondierend ausgebildeten Kraftschlusselementen 38b, 40b der Tischeinheit 14b in einen kraftschlüssigen Kontakt gebracht und verriegeln die Tischeinheit 14b dadurch in den Randbereichen 22b, 24b mit der Anbindungseinheit 28b. Dadurch kann die Tischeinheit 14b durch die Verstellung des einen Betätigungselements 60b von seiner Nicht-Betätigungsstellung in seine Betätigungsstellung, wenn die Tischeinheit 14b in ihrer Verstaustellung angeordnet ist, vorteilhaft in einem Mittelbereich 26b formschlüssig und in den beiden Randbereichen 22b, 24b kraftschlüssig mit der Anbindungseinheit 28b verriegelt werden.

Das Verriegelmodul 20b ist in dem verriegelten Zustand dazu vorgesehen, eine Haltekraft zwischen der Tischeinheit 14b und der Anbindungseinheit 28b zu vergrößern, wenn eine, in einer Öffnungsrichtung 86b der Tischeinheit 14b auf die Tischeinheit 14b wirkende Kraft, an der Tischeinheit 14b angreift. Dadurch kann die Haltekraft zwischen der Tischeinheit 14b gegen eine Öffnungsbewegung der Tischeinheit 14b vorteilhaft selbstverstärkend ausgebildet werden, wenn die Tischeinheit 14b in der Verstaustellung verriegelt ist. Die als Nocken ausgebildeten Kraftschlusselemente 34b, 36b sind dazu vorgesehen, bei einer in die Öffnungsrichtung 84b der Tischeinheit 14b auf die Tischeinheit 14b wirkenden Kraft, durch eine Selbstverstärkung den Reibschluss zu vergrößern. Dazu sind die als Nocken ausgebildeten Kraftschlusselemente 34b, 36b bei einer Öffnungsbewegung der Tischeinheit 14b in der Öffnungsrichtung 84b dazu vorgesehen, verschwenkt zu werden. Durch die exzentrische Lagerung der Kraftschlusselemente 34b, 36b über ihre Schwenklager 74b werden die Reibschlussflächen 72b der Kraftschlusselemente 34b, 36b so zu den Kraftschlusselementen 38b, 40b verschoben, dass eine höhere Reibkraft zwischen den Kraftschlusselementen 34b, 36b der Anbindungseinheit 28b und den Kraftschlusselementen 38b, 40b der Tischeinheit 14b entsteht. Dadurch kann die Tischeinheit 14b vorteilhaft gegen eine Bewegung in Öffnungsrichtung 86b in dem verriegelten Zustand des Verriegelmoduls 20b gesichert werden.

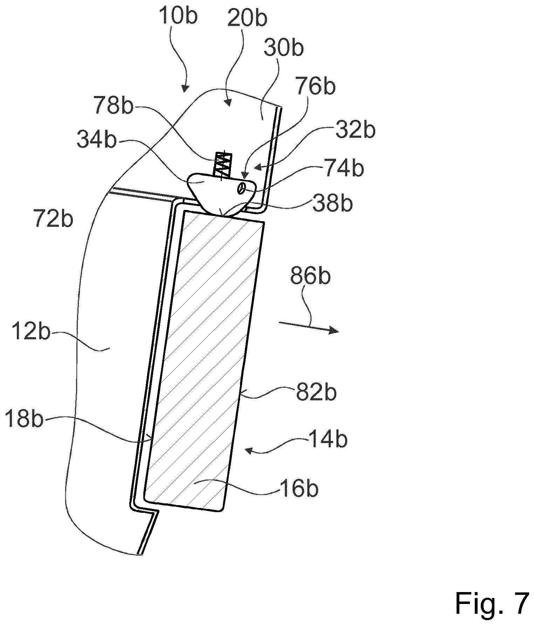

Die Figuren 7 bis 10 zeigen eine Tischvorrichtung für einen Sitz 10c in einem dritten Ausführungsbeispiel. Der Sitz 10c weist ein Sitzbauteil 12c auf. Das Sitzbauteil 12c ist als eine Rückenlehne ausgebildet. Die Tischvorrichtung umfasst eine Tischeinheit 14c. Die Tischeinheit 14c ist von zwei zueinander verschwenkbaren Grundkörpern 88c, 90c ausgebildet. Der Grundkörper 88c, 90c bilden zusammen den Tischgrundkörper aus. Die Grundkörper 88c, 90c bilden in einem ausgeklappten Zustand eine Tischfläche 18c aus. In einem eingeklappten Zustand sind Oberflächen beider Grundkörper 88c, 90c, die die Tischfläche 18c ausbilden, aneinander angeklappt. Die Tischeinheit 14c ist über eine Schwenklagerung 92c mit dem Sitz 10c gekoppelt. Die Tischeinheit 14c ist zwischen einer Verstaustellung und einer Gebrauchsstellung verstellbar. Die Tischeinheit 14c ist insbesondere über ein Lagermodul zwischen der Gebrauchsstellung und der Verstaustellung verschwenkbar. In der Gebrauchsstellung ist die Tischeinheit 14c mit einer Tischfläche der Tischeinheit 14c im Wesentlichen parallel zu einer Aufständerebene ausgerichtet. In der Verstaustellung ist die Tischeinheit 14c an das Sitzbauteil 12c angeklappt und kann nicht zum Abstellen von Gegenständen genutzt werden.

Die Tischvorrichtung umfasst ein Verriegelmodul 20c. Das Verriegelmodul 20c ist dazu vorgesehen, die Tischeinheit 14c in ihrer Verstaustellung an dem Sitzbauteil 12c zu fixieren. Das Verriegelmodul 20c weist einen verriegelten Zustand auf, in dem es die Tischeinheit 14c in ihrer Verstaustellung verriegelt. Das Verriegelmodul 20c weist einen entriegelten Zustand auf, in dem es die Tischeinheit 14c freigibt, sodass diese aus der Verstaustellung herausbewegt werden kann. Das Verriegelmodul 20c ist insbesondere dazu vorgesehen, die Tischeinheit 14c so an dem Sitzbauteil 12c zu fixieren, dass die Tischeinheit 14c auch in einem Crashfall sicher an dem Sitzbauteil 12c fixiert ist. Dazu ist das Verriegelmodul 20c dazu vorgesehen, die Tischeinheit 14c an mehreren Positionen mit dem Sitzbauteil 12c zu koppeln. Das Verriegelmodul 20c ist insbesondere dazu vorgesehen, die Tischeinheit 14c in zwei gegenüberliegenden Randbereichen 22c, 24c mit dem Sitzbauteil 12c zu koppeln.

Das Verriegelmodul 20c weist eine Anbindungseinheit 28c auf. Die Anbindungseinheit 28c ist fest mit dem Sitzbauteil 12c verbunden. Grundsätzlich ist es auch denkbar, dass die Anbindungseinheit 28c zumindest teilweise oder komplett von dem Sitzbauteil 12c ausgebildet wird. Die Anbindungseinheit 28c weist ein Gehäuse 30c auf. Das Gehäuse 30c ist von einem Grundkörper gebildet. Das Gehäuse 30c ist von einer Grundschale und einer Abdeckplatte gebildet. Das Gehäuse 30c spannt einen Innenraum 32c auf. Der Innenraum 32c des Gehäuses 30c der Anbindungseinheit 28c ist dazu vorgesehen, dass Bauteile des Verriegelmoduls 20c darin angeordnet und/oder gelagert sind. Die Anbindungseinheit 28c ist starr mit dem Sitzbauteil 12c verbunden. Die Anbindungseinheit 28c ist dazu vorgesehen, dass die Tischeinheit 14c in ihrer Verstaustellung an der Anbindungseinheit 28c anbindbar ist. Die Anbindungseinheit 28c ist zumindest teilweise oberhalb der Tischeinheit 14c angeordnet. Die Anbindungseinheit 28c ist in der Verstaustellung der Tischeinheit 14c oberhalb der Tischeinheit 14c angeordnet. Ein Teil der Anbindungseinheit 28c ist in der Verstaustellung der Tischeinheit 14c zwischen der Tischeinheit 14c und dem Sitzbauteil 12c angeordnet.

Die Tischeinheit 14c ist in ihrer Verstaustellung an der Anbindungseinheit 28c verriegelbar. Die Tischeinheit 14c ist über die mit dem Sitzbauteil 12c fest verbundene Anbindungseinheit 28c fest mit dem Sitzbauteil 12c verriegelbar. Das Verriegelmodul 20c umfasst zwei Formschlusselemente 34c, 36c. Die Formschlusselemente 34c, 36c sind zur formschlüssigen Anbindung der Tischeinheit 14c an die Anbindungseinheit 28c vorgesehen. Mittels der Formschlusselemente 34c, 36c ist die Tischeinheit 14c in dem verriegelten Zustand mit der Anbindungseinheit 28c formschlüssig gekoppelt. Die Formschlusselemente 34c, 36c sind in äußeren Randbereichen der Anbindungseinheit 28c angeordnet, die jeweils mit einem der äußeren Randbereiche 22c, 24c der Tischeinheit 14c deckungsgleich angeordnet sind. Die Formschlusselemente 34c, 36c sind als Formschlusshülsen ausgebildet. Die Formschlusselemente 34c, 36c sind als Spannhülsen ausgebildet. Die Formschlusselemente 34c, 36c sind dabei als aus dem Stand der Technik bekannte Formschlusshülsen ausgebildet und sollen hier deswegen nur kurz in ihrer groben Funktion beschrieben werden. Die Formschlusselemente 34c, 36c weisen einen Aufnahmebereich und in dem Aufnahmebereich elastisch nach außen verstellbare Rastelemente auf. Die Rastelemente der Formschlusselemente 34c, 36c sind als Greifelemente ausgebildet. Die Rastelemente sind dabei in einem vorderen Bereich der Formschlusselemente 34c, 36c angeordnet. Die Rastelemente definieren eine Öffnung der Formschlusselemente 34c, 36c. In einem Normalbetriebszustand bilden die Rastelemente einen ersten Öffnungsquerschnitt der Formschlusselemente 34c, 36c aus. Aus dem Normalbetriebszustand können die Rastelemente entgegen einer Federkraft nach außen ausgelenkt werden, um einen Öffnungsquerschnitt der Formschlusselemente 34c, 36c zu vergrößern. Dabei ist denkbar, dass die Rastelemente entgegen einer Federkraft einer Feder, beispielsweise einer Ringfeder, ausgelenkt werden oder dass die Rastelemente selbst elastisch verformt werden. Durch das Auslenken der Rastelemente können korrespondierend ausgebildete Formschlusselemente, die insbesondere einen Hinterschnitt aufweisen, in einer Kopplungsrichtung 98c der Formschlusselemente 34c, 36c eingeführt werden. Die korrespondierend ausgebildeten Formschlusselemente können dabei hinter den Rastelementen der Formschlusselemente 34c, 36c eingreifen, wenn diese durch die Federbelastung hinter einem breiten Querschnitt der eingeführten Formschlusselemente einrasten.

Zur formschlüssigen Kopplung mit den in der Anbindungseinheit 28c angeordneten Formschlusselementen 34c, 36c weist das Verriegelmodul 20c zwei fest mit der Tischeinheit 14c verbundene Formschlusselemente 38c, 40c auf. Die Formschlusselemente 38c, 40c der Tischeinheit 14c sind korrespondierend zu den Formschlusselementen 34c, 36c der Anbindungseinheit 28c ausgebildet. Die Formschlusselemente 38c, 40c der Tischeinheit 14c sind als Stiftelemente ausgebildet. Die als Stiftelemente ausgebildeten Formschlusselemente 38c, 40c bilden dabei an einem vorderen Bereich jeweils einen breiten Kopfbereich aus. Die breiten Kopfbereiche der Formschlusselemente 38c, 40c sind dazu vorgesehen, in die als Formschlusshülsen ausgebildeten Formschlusselemente 34c, 36c formschlüssig einzugreifen. Die breiten Kopfbereiche sind dabei pfeilförmig ausgebildet. Grundsätzlich ist es auch denkbar, dass die breiten Kopfbereiche der Formschlusselemente 38c, 40c jeweils eine Kugelform ausbilden. Die als Stiftelemente ausgebildeten Formschlusselemente 38c, 40c sind an dem Grundkörper 90c der Tischeinheit 14c angebracht. Die Formschlusselemente 38c, 40c sind an einer Oberfläche des Grundkörpers 90c angeordnet, der auch die Tischfläche 18c ausbildet. In der Oberfläche des Grundkörpers 90c, der die Tischfläche 18c ausbildet, sind zur Anordnung der als Stifte ausgebildeten Formschlusselemente 38c, 40c Ausnehmungen 94c, 96c eingebracht. Die als Stifte ausgebildeten Formschlusselemente 38c, 40c erstrecken sich dabei parallel zu einer senkrecht auf der Tischfläche 18c stehenden Normalrichtung. Die als Stifte ausgebildeten Formschlusselemente 38c, 40c ragen dabei nicht über eine Ebene, die von der Tischfläche 18c aufgespannt wird, hinaus.

Die Formschlusselemente 34c, 36c, 38c, 40c sind dazu vorgesehen, die Tischeinheit 14c in einer, in Öffnungsrichtung 86c der Tischeinheit 14c lösbaren formschlüssigen Verbindung mit der Anbindungseinheit 28c zu koppeln. Die Formschlusselemente 38c, 40c der Tischeinheit 14c und die Formschlusselemente 34c, 36c der Anbindungseinheit 28c sind dabei entlang einer Kopplungsrichtung 98c, die parallel zu einer Öffnungsrichtung 86c der Tischeinheit 14c verläuft, formschlüssig miteinander verbindbar und wieder voneinander trennbar. Die Formschlusselemente 34c, 36c der Anbindungseinheit 28c sind entlang der Kopplungsrichtung 98c verschiebbar in dem Gehäuse 30c der Anbindungseinheit 28c gelagert. Zur Trennung der formschlüssigen Verbindung zwischen den Formschlusselementen 38c, 40c der Tischeinheit 14c und den Formschlusselementen 34c, 36c der Anbindungseinheit 28c werden die Formschlusselemente 34c, 36c entgegen der Kopplungsrichtung 98c bewegt. Zur Trennung der formschlüssigen Verbindung zwischen den Formschlusselementen 38c, 40c der Tischeinheit 14c und den Formschlusselementen 34c, 36c der Anbindungseinheit 28c werden die Formschlusselemente 34c, 36c insbesondere von dem Tisch wegbewegt.

Das Verriegelmodul 20c umfasst einen Betätigungsmechanismus 42c. Der Betätigungsmechanismus 42c ist dazu vorgesehen, die beweglich gelagerten Formschlusselemente 34c, 36c zu betätigen. Der Betätigungsmechanismus 42c ist dazu vorgesehen, die Formschlusselemente 34c, 36c zwischen einer Freigabestellung und einer Verriegelstellung zu verstellen. Der Betätigungsmechanismus 42c ist in der Anbindungseinheit 28c angeordnet. Der Betätigungsmechanismus 42c ist dazu vorgesehen, eine auf ihn ausgeübte Betätigungsbewegung an die beiden Formschlusselemente 34c, 36c weiterzuleiten, um diese zu betätigen, insbesondere um diese von ihrer Verriegelstellung in ihre Freigabestellung zu bewegen. Der Betätigungsmechanismus 42c umfasst ein Rotationselement 100c. Das Rotationselement 100c ist als ein Drehstab ausgebildet. Das Rotationselement 100c ist drehbar in dem Innenraum 32c des Gehäuses gelagert. Das Rotationselement 100c verläuft in einer Querrichtung. Das Rotationselement 100c erstreckt sich zwischen beiden Randbereichen der Anbindungseinheit 28c. Das Rotationselement 100c erstreckt sich von dem einen Formschlusselement 34c der Anbindungseinheit 28c bis zu dem gegenüberliegenden Formschlusselement 36c der Anbindungseinheit 28c. An einem ersten Ende ist das Rotationselement 100c mit dem einen Formschlusselement 34c gekoppelt. An einem zweiten Ende ist das Rotationselement 100c mit dem anderen Formschlusselement 36c gekoppelt. Das Rotationselement 100c ist jeweils formschlüssig mit den Formschlusselementen 34c, 36c gekoppelt. Die Kopplung der Formschlusselemente 34c, 36c mit dem Rotationselement 100c ist dazu vorgesehen, eine Rotationsbewegung des Rotationselements 100c in einer Axialbewegung der Formschlusselemente 34c, 36c in oder entgegen der Kopplungsrichtung 98c zu bewirken. Zur Kopplung mit den Formschlusselementen 34c, 36c weist das Rotationselement 100c je Formschlusselement 34c, 36c ein Hebelelement 108c, 110c auf. Die Hebelelemente 108c, 110c übertragen eine Rotationsbewegung des Rotationselements 100c auf die Formschlusselemente 34c, 36c und bewegen diese dadurch entgegen der Kopplungsrichtung 98c. Die Hebelelemente 108c, 110c sind dazu vorgesehen, die Formschlusselemente 34c, 36c, 38c, 40c aktiv aus ihrer Verriegelstellung, also aus einer formschlüssigen Verbindung miteinander, zu ziehen.

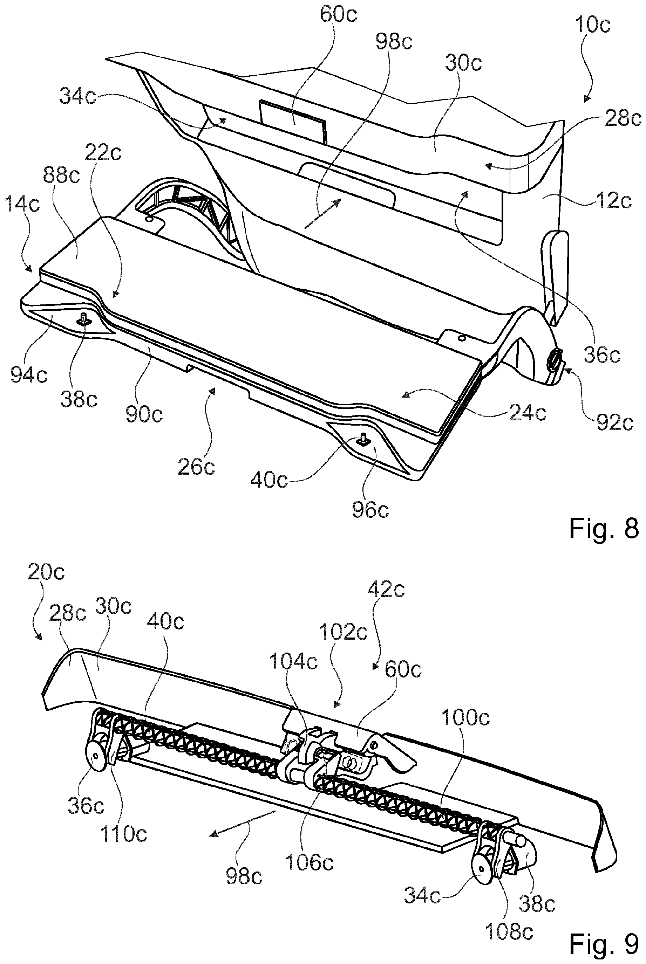

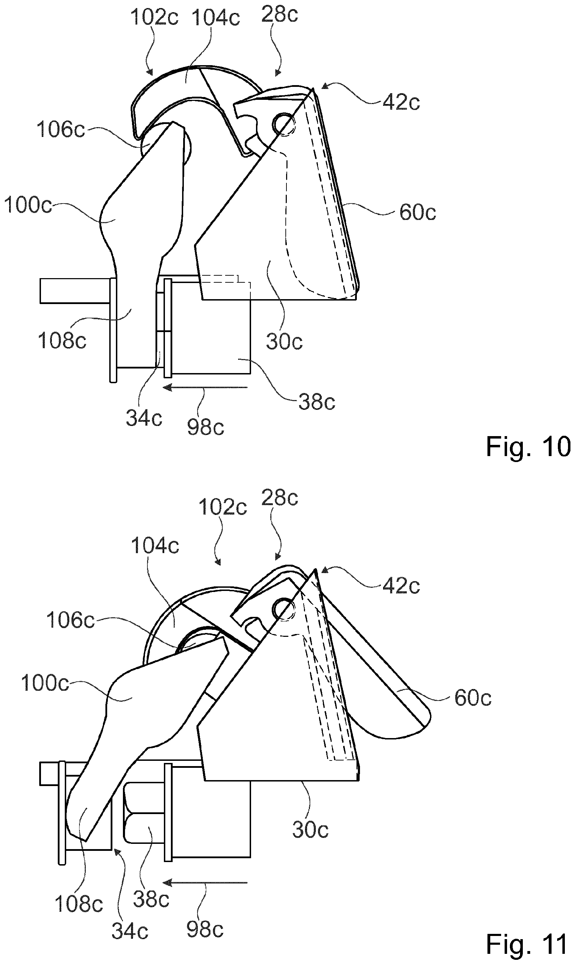

Das Verriegelmodul 20c umfasst ein Betätigungselement 60c. Das Betätigungselement 60c ist zur händischen Bedienung durch einen Passagier vorgesehen. Das Betätigungselement 60c ist dazu vorgesehen, das Verriegelmodul 20c zwischen seiner entriegelten Stellung und seiner verriegelten Stellung zu verstellen. Das Betätigungselement 60c ist als ein schwenkbares Hebelelement ausgebildet. Das Betätigungselement 60c ist an der Anbindungseinheit 28c angebracht. Das Betätigungselement 60c ist mittig an der Anbindungseinheit 28c angebracht. Das Betätigungselement 60c ist dazu vorgesehen, das Rotationselement 100c bei einer Betätigung zu verdrehen. Zur Kopplung mit dem Rotationselement 100c weist das Verriegelmodul 20c einen Koppelmechanismus 102c auf. Der Koppelmechanismus 102c weist ein fest mit dem Betätigungselement 60c verbundenes Hakenelement 104c auf. Das Hakenelement 104c wird bei einer Betätigung des Betätigungselements 60c mit verschwenkt. Der Koppelmechanismus 102c weist ein Mitnahmeelement 106c auf, das fest mit dem Rotationselement 100c gekoppelt ist. Das Mitnahmeelement 106c ist als eine drehbar gelagerte Rolle ausgebildet. Das Hakenelement 104c greift in das als Rolle ausgebildete Mitnahmeelement 106c ein, um dieses zu verstellen (siehe Figur 9 und Figur 10). Bei einer Betätigung des Betätigungselements 60c wird das Mitnahmeelement 106c von dem Hakenelement 104c verschoben, wodurch das Rotationselement 100c so verdreht wird, dass es die bewegbar gelagerten Formschlusselemente 34c, 36c entgegen der Kopplungsrichtung 98c bewegt. Sind die Formschlusselemente 38c, 40c der Tischeinheit 14c zu diesem Zeitpunkt formschlüssig mit den Formschlusselementen 34c, 36c der Anbindungseinheit 28c verbunden, werden die Formschlusselemente 34c, 36c der Anbindungseinheit 28c über die Hebelelemente 108c, 110c aus einer Formschlussverbindung mit den Formschlusselementen 38c, 40c gezogen. Die Tischeinheit 14c ist entriegelt und kann aus ihrer Verstaustellung heraus in eine Gebrauchsstellung geschwenkt werden. Zur Kopplung der Formschlusselemente 38c, 40c der Tischeinheit 14c mit den Formschlusselementen 34c, 36c der Anbindungseinheit 28c wird die Tischeinheit 14c lediglich in ihre Verstaustellung verschwenkt, wodurch die Formschlusselemente 34c, 36c, 38c, 40c in ihrer Kopplungsrichtung 98c miteinander gekoppelt werden und in eine formschlüssige Verbindung miteinander kommen.

Ein Bediener kann das Betätigungselement 60c händisch zwischen einer Betätigungsstellung und einer Nicht-Betätigungsstellung verstellen. In einer Betätigungsstellung betätigt das Betätigungselement 60c den Betätigungsmechanismus 42c in seine betätigte Stellung, und verdreht das Rotationselement 100c so, dass die Formschlusselemente 34c, 36c entgegen der Kopplungsrichtung 98c bewegt werden. Ist das Betätigungselement 60c in seiner Nicht-Betätigungsstellung angeordnet, betätigt es den Betätigungsmechanismus 42c nicht und dieser ist in seiner unbetätigten Stellung angeordnet, wobei das Rotationselement 100c nicht verdreht ist und die Formschlusselemente 34c, 36c in ihrer Verriegelstellung angeordnet sind. Das Betätigungselement 60c ist durch ein nicht näher dargestelltes Federelement federbelastet, durch das das Betätigungselement 60c in seine Nicht-Betätigungsstellung gedrückt wird.

Die Figuren 11 bis 13 zeigen eine Tischvorrichtung für einen Sitz 10d in einem vierten Ausführungsbeispiel. Der Sitz 10d weist ein Sitzbauteil 12d auf. Das Sitzbauteil 12d ist als eine Rückenlehne ausgebildet. Die Tischvorrichtung umfasst eine Tischeinheit 14d. Die Tischeinheit 14d ist von einem Grundkörper 16d ausgebildet. Der Grundkörper 16d bildet einen Tischgrundkörper aus. Die Tischeinheit 14d weist eine Tischfläche 18d auf. Die Tischfläche 18d ist als eine Oberfläche des Grundkörpers 16d ausgebildet. Die Tischeinheit 14d ist über eine Schwenklagerung mit dem Sitz 10d gekoppelt. Die Tischeinheit 14d ist zwischen einer Verstaustellung und einer Gebrauchsstellung verstellbar. Die Tischeinheit 14d ist insbesondere über ein Lagermodul zwischen der Gebrauchsstellung und der Verstaustellung verschwenkbar. In der Gebrauchsstellung ist die Tischeinheit 14d mit einer Tischfläche 18d der Tischeinheit 14d im Wesentlichen parallel zu einer Aufständerebene ausgerichtet. In der Verstaustellung ist die Tischeinheit 14d an das Sitzbauteil 12d angeklappt und kann nicht zum Abstellen von Gegenständen genutzt werden.

Die Tischvorrichtung umfasst ein Verriegelmodul 20d. Das Verriegelmodul 20d ist dazu vorgesehen, die Tischeinheit 14d in ihrer Verstaustellung an dem Sitzbauteil 12d zu fixieren. Das Verriegelmodul 20d weist einen verriegelten Zustand auf, in dem das Verriegelmodul 20d die Tischeinheit 14d in ihrer Verstaustellung verriegelt. Das Verriegelmodul 20d weist einen entriegelten Zustand auf, in dem das Verriegelmodul 20d die Tischeinheit 14d freigibt, sodass diese aus der Verstaustellung herausbewegt werden kann. Das Verriegelmodul 20d ist insbesondere dazu vorgesehen, die Tischeinheit 14d so an dem Sitzbauteil 12d zu fixieren, dass die Tischeinheit 14d auch in einem Crashfall sicher an dem Sitzbauteil 12d fixiert ist. Dazu ist das Verriegelmodul 20d dazu vorgesehen, die Tischeinheit 14d an mehreren Positionen mit dem Sitzbauteil 12d zu koppeln. Das Verriegelmodul 20d ist insbesondere dazu vorgesehen, die Tischeinheit 14d in zwei gegenüberliegenden Randbereichen 22d, 24d mit dem Sitzbauteil 12d zu koppeln.

Das Verriegelmodul 20d weist eine Anbindungseinheit 28d auf. Die Anbindungseinheit 28d ist fest mit dem Sitzbauteil 12d verbunden. Grundsätzlich ist es auch denkbar, dass die Anbindungseinheit zumindest teilweise oder komplett von dem Sitzbauteil 12d ausgebildet wird. Die Anbindungseinheit 28d weist ein Gehäuse 30d auf. Das Gehäuse 30d ist von einem Grundkörper gebildet. Das Gehäuse 30d ist von einer Grundschale und einer Abdeckplatte gebildet. Das Gehäuse 30d spannt einen Innenraum 32d auf. Der Innenraum 32d des Gehäuses 30d der Anbindungseinheit 28d ist dazu vorgesehen, dass Bauteile des Verriegelmoduls 20d darin angeordnet und/oder gelagert sind. Die Anbindungseinheit 28d ist starr mit dem Sitzbauteil 12d verbunden. Die Anbindungseinheit 28d ist dazu vorgesehen, dass die Tischeinheit 14d in ihrer Verstaustellung an der Anbindungseinheit 28d anbindbar ist. Die Anbindungseinheit 28d ist zumindest teilweise oberhalb der Tischeinheit 14d angeordnet. Die Anbindungseinheit 28d ist in der Verstaustellung der Tischeinheit 14d oberhalb der Tischeinheit 14d angeordnet. Ein Teil der Anbindungseinheit 28d ist in der Verstaustellung der Tischeinheit 14d zwischen der Tischeinheit 14d und dem Sitzbauteil 12d angeordnet.

Die Tischeinheit 14d ist in ihrer Verstaustellung an der Anbindungseinheit 28d verriegelbar. Die Tischeinheit 14d ist über die mit dem Sitzbauteil 12d fest verbundene Anbindungseinheit 28d fest mit dem Sitzbauteil 12d verriegelbar. Das Verriegelmodul 20d umfasst zwei Formschlusselemente 34d, 36d. Die Formschlusselemente 34d, 36d sind zur formschlüssigen Anbindung der Tischeinheit 14d an die Anbindungseinheit 28d vorgesehen. Mittels der Formschlusselemente 34d, 36d ist die Tischeinheit 14d in dem verriegelten Zustand mit der Anbindungseinheit 28d formschlüssig gekoppelt. Die Formschlusselemente 34d, 36d sind in äußern Randbereichen der Anbindungseinheit 28d angeordnet, die jeweils mit einem der äußeren Randbereiche 22d, 24d der Tischeinheit 14d deckungsgleich angeordnet sind. Die Formschlusselemente 34d, 36d sind als Federelemente ausgebildet. Die Formschlusselemente 34d, 36d sind als Schenkelfedern ausgebildet. Grundsätzlich wäre es auch denkbar, dass die Formschlusselemente 34d, 36d als dem Fachmann als sinnvoll erscheinende Blattfedern ausgebildet sind. Die Formschlusselemente 34d, 36d sind als gewickelte Drahtfedern ausgebildet, die jeweils zwei Federschenkel 112d, 114d aufweisen, die von einem gewundenen Bereich 116d abstehen. Die Federschenkel 112d, 114d weisen in einem unbelasteten Zustand in unterschiedlichen Bereichen unterschiedliche Abstände zueinander auf, die durch elastische Verformung vergrößert werden können. Die Federschenkel 112d, 114d weisen jeweils eine zueinander spiegelsymmetrische Kontur auf. Die Formschlusselemente 34d, 36d sind im Wesentlichen gleich ausgebildet, weswegen im Folgenden lediglich das Formschlusselement 34d näher beschrieben werden soll. Die Beschreibung kann auf das andere Formschlusselement 36d übertragen werden. Das Formschlusselement 34d weist einen Koppelbereich 118d auf. In dem Koppelbereich 118d weisen die Federschenkel 112d, 114d einen ersten Abstand zueinander auf. Der Koppelbereich 118d ist dazu vorgesehen, dass ein korrespondierend ausgebildetes Formschlusselement zwischen den beiden Federschenkeln 112d, 114d formschlüssig mit dem Formschlusselement 34d verbunden werden kann. Das Formschlusselement 34d weist einen Entriegelungselementbereich 120d auf. In dem Entriegelungselementbereich 120d weisen die beiden Federschenkel 112d, 114d einen Abstand voneinander auf, der in etwa so groß ist wie der Abstand in dem Koppelbereich 118d. Der Entriegelungselementbereich 120d ist beabstandet zu dem Koppelbereich 118d angeordnet. Beidseitig des Entriegelungselementbereichs 120d weist das Formschlusselement 34d jeweils einen Entkoppelbereich 122d, 124d auf. In den Entkoppelbereichen 122d, 124d sind die beiden Federschenkel 112d, 114d unmittelbar aneinander angeordnet. In den Entkoppelbereichen 122d, 124d weisen die beiden Federschenkel 112d, 114d einen Abstand zueinander auf, der wesentlich kleiner ist als die Abstände in dem Koppelbereich 118d und dem Entriegelungselementbereich 120d. Der Entkoppelbereich 122d ist zwischen dem Koppelbereich 118d und dem Entriegelungselementbereich 120d angeordnet.

Zur formschlüssigen Kopplung mit den in der Anbindungseinheit 28d angeordneten Formschlusselementen 34d, 36d weist das Verriegelmodul 20d zwei fest mit der Tischeinheit 14d verbundene Formschlusselemente 38d, 40d auf. Die Formschlusselemente 38d, 40d der Tischeinheit 14d sind korrespondierend zu den Formschlusselementen 34d, 36d der Anbindungseinheit 28d ausgebildet. Die Formschlusselemente 38d, 40d der Tischeinheit 14d sind als Stiftelemente ausgebildet. Die als Stiftelemente ausgebildeten Formschlusselemente 38d, 40d sind an dem Grundkörper der Tischeinheit 14d angebracht. Die Formschlusselemente 38d, 40d sind an einer Oberfläche des Grundkörpers angeordnet, der auch die Tischfläche 18d ausbildet. Die als Stifte ausgebildeten Formschlusselemente 38d, 40d erstrecken sich dabei parallel zu einer senkrecht auf der Tischfläche der Tischeinheit 14d stehenden Normalrichtung. Die als Stiftelemente ausgebildeten Formschlusselemente 38d, 40d bilden dabei an einem vorderen Bereich jeweils einen breiten Kopfbereich 126d aus. Die breiten Kopfbereiche 126d der Formschlusselemente 38d, 40d sind dazu vorgesehen, in die Koppelbereiche 118d zwischen den Federschenkeln 112d, 114d der Formschlusselemente 34d, 36d formschlüssig einzugreifen. Die breiten Kopfbereiche 126d sind dabei pfeilförmig ausgebildet. Grundsätzlich ist es auch denkbar, dass die breiten Kopfbereiche 126d kugelförmig ausgebildet sind.

Die in der Tischeinheit 14d angeordneten Formschlusselemente 38d, 40d sind dazu vorgesehen, von den in der Anbindungseinheit 28d angeordneten Formschlusselementen 34d, 36d zur Verriegelung der Tischeinheit 14d im Wesentlichen umschlossen zu werden. Zur Entriegelung der Formschlusselemente 38d, 40d der Tischeinheit 14d von den Formschlusselementen 34d, 36d der Anbindungseinheit 28d sind die Formschlusselemente 34d, 36d dazu vorgesehen, elastisch verformt zu werden. Dabei werden die Federschenkel 112d, 114d der Formschlusselemente 34d, 36d elastisch auseinanderbewegt. Dadurch geben die Formschlusselemente 34d, 36d in ihren Koppelbereichen 118d die Formschlusselemente 38d, 40d der Tischeinheit 14d frei.

Zur Entriegelung der Formschlusselemente 34d, 36d weist das Verriegelmodul 20d je Formschlusselement 34d, 36d ein Entriegelungselement 128d, 130d auf. In einem verriegelten Zustand sind die Entriegelungselemente 128d, 130d in den Entriegelungselementbereichen 120d der Formschlusselemente 34d, 36d angeordnet. Die Entriegelungselemente 128d, 130d weisen einen Durchmesser auf, der kleiner ist als ein Abstand der beiden Federschenkel 112d, 114d in den Entriegelungselementbereichen 120d der Formschlusselemente 34d, 36d. Dadurch lenken die Entriegelungselemente 128d, 130d die beiden Federschenkel 112d, 114d der Formschlusselemente 34d, 36d nicht nach außen aus, wenn sie in den Entriegelungselementbereichen 120d der Formschlusselemente 34d, 36d angeordnet sind. Zur Entriegelung der Formschlusselemente 34d, 36d, 38d, 40d voneinander sind die Entriegelungselemente 128d, 130d dazu vorgesehen, die Formschlusselemente 34d, 36d elastisch zu verformen. Zur Entriegelung der Formschlusselemente 34d, 36d, 38d, 40d voneinander sind die Entriegelungselemente 128d, 130d dazu vorgesehen, die Federschenkel 112d, 114d der Formschlusselemente 34d, 36d voneinander wegzubewegen. Dadurch vergrößert sich ein Abstand der Federschenkel 112d, 114d der Formschlusselemente 34d, 36d in den Koppelbereichen 118d so weit, dass die als Stifte ausgebildeten Formschlusselemente 38d, 40d der Tischeinheit 14d von der Anbindungseinheit 28d gelöst werden können.

Das Verriegelmodul 20d umfasst ein Betätigungselement 60d. Das Betätigungselement 60d ist zur händischen Bedienung durch einen Passagier vorgesehen. Das Betätigungselement 60d ist dazu vorgesehen, das Verriegelmodul 20d zwischen seiner entriegelten Stellung und seiner verriegelten Stellung zu verstellen. Ein Bediener, insbesondere ein Passagier, kann das Verriegelmodul 20d durch händische Betätigung des Betätigungselements 60d zwischen der verriegelten Stellung und der entriegelten Stellung verstellen. Ein Bediener kann das Betätigungselement 60d händisch zwischen einer Betätigungsstellung und einer Nicht-Betätigungsstellung verstellen. Dadurch kann der Passagier durch Betätigung des Betätigungselements 60d die Tischeinheit 14d wahlweise in ihrer Verstaustellung an dem Sitzbauteil 12d fixieren oder freigeben und dann in ihre Gebrauchsstellung bewegen. Das Betätigungselement 60d ist als ein axial verschiebbarer Hebel ausgebildet. Das als axial verschiebbarer Hebel ausgebildete Betätigungselement 60d ist dabei dazu vorgesehen, in einer Horizontalrichtung axial bewegt zu werden. Grundsätzlich wäre es auch denkbar, dass das als axial verschiebbarer Hebel ausgebildete Betätigungselement 60d dazu vorgesehen ist, in einer Horizontalrichtung axial bewegt zu werden. Das Betätigungselement 60d ist starr mit den Entriegelungselementen 128d, 130d verbunden. Die Entriegelungselemente 128d, 130d sind an gegenüberliegenden Enden des Betätigungselements 60d fest angeordnet. In der Nicht-Betätigungsstellung ist das Betätigungselement 60d mittig angeordnet. In der Nicht-Betätigungsstellung des Betätigungselements 60d sind die mit dem Betätigungselement 60d gekoppelten Entriegelungselemente 128d, 130d in den Entriegelungselementbereichen 120d der Formschlusselemente 34d, 36d angeordnet. Durch axiale Verschiebung des Betätigungselements 60d werden die Entriegelungselemente 128d, 130d aus den Entriegelungselementbereichen 120d in einen der Entkoppelbereiche 122d, 124d bewegt, wodurch die Entriegelungselemente 128d, 130d die entsprechenden Federschenkel 112d, 114d der Formschlusselemente 34d, 36d elastisch verformen, insbesondere auseinanderdrücken. Dadurch werden die Federschenkel 112d, 114d der Formschlusselemente 34d, 36d so weit auseinander gedrückt, dass ein Abstand in den Koppelbereichen 118d größer ist als die Kopfbereiche 126d der Formschlusselemente 38d, 40d der Tischeinheit 14d. Die Tischeinheit 14d ist entriegelt und kann aus ihrer Verstaustellung heraus in eine Gebrauchsstellung geschwenkt werden. Zur Unterstützung einer Bewegung der Formschlusselemente 38d, 40d der Tischeinheit 14d aus den Koppelbereichen 118d der Formschlusselemente 34d, 36d heraus weist das Verriegelmodul 20d je Formschlusselement 38d, 40d der Tischeinheit 14d ein Federelement 132d auf, das in der Anbindungseinheit 28d gelagert ist und eine Federkraft auf die in den Koppelbereichen 118d der Formschlusselemente 34d, 36d angeordneten Formschlusselemente 38d, 40d ausübt, die eine Entkoppelbewegung der Formschlusselemente 38d, 40d unterstützt. Zur Kopplung der Formschlusselemente 38d, 40d der Tischeinheit 14d mit den Formschlusselementen 34d, 36d der Anbindungseinheit 28d wird die Tischeinheit 14d lediglich in ihre Verstaustellung verschwenkt, wodurch die Formschlusselemente 38d, 40d in die Koppelbereiche 118d der Formschlusselemente 34d, 36d zwischen die Federschenkel 112d, 114d gedrückt werden. Die Formschlusselemente 38d, 40d drücken dabei die Federschenkel 112d, 114d mit ihren Kopfbereichen 126d elastisch auseinander, die Federschenkel 112d, 114d schnappen hinter den Kopfbereichen 126d wieder ein, wodurch die Formschlusselemente 34d, 36d, 38d, 40d formschlüssig miteinander gekoppelt werden.

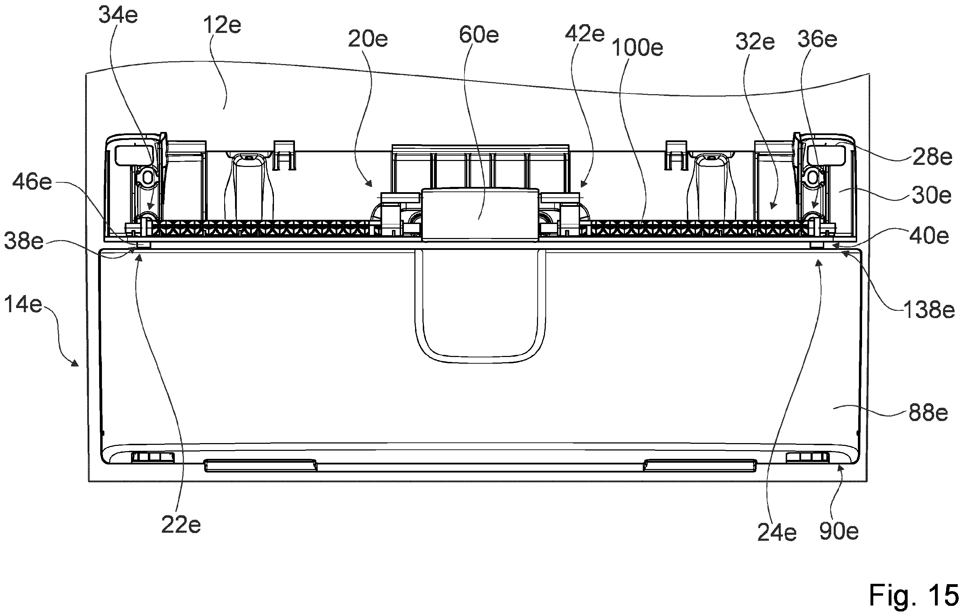

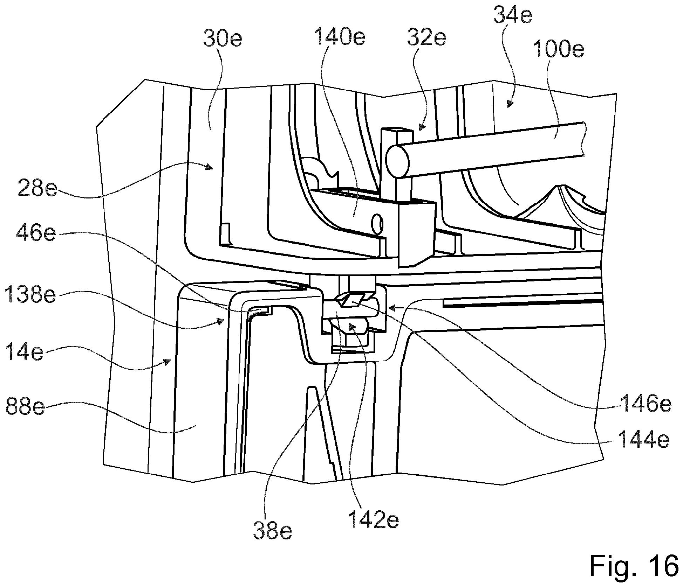

Die Figuren 15 und 16 zeigen eine Tischvorrichtung für einen Sitz 10e in einem fünften Ausführungsbeispiel. Der Sitz 10e weist ein Sitzbauteil 12e auf. Das Sitzbauteil 12e ist als eine Rückenlehne ausgebildet. Die Tischvorrichtung umfasst eine Tischeinheit 14e. Die Tischeinheit 14e ist von zwei zueinander verschwenkbaren Grundkörpern 88e, 90e ausgebildet. Die Tischvorrichtung weist eine Lagereinheit 138e auf, über die die beiden Grundkörper 88e, 90e schwenkbar miteinander verbunden sind. Die Lagereinheit 138e weist zwei Lagerstellen auf, an denen die beiden Grundkörper 88e, 90e miteinander schwenkbar verbunden sind. An den Lagerstellen weist die Lagereinheit 138e je Grundkörper 88e, 90e ein mit dem jeweiligen Grundkörper 88e, 90e verbundenes Gelenkelement 46e auf. Die Gelenkelemente 46e sind als Lagerstifte ausgebildet. Die beiden Gelenkelemente 46 der beiden Grundkörper 88e, 90e an einer Lagerstelle sind über Koppelelemente miteinander verbunden. Die Koppelelemente sind jeweils schwenkbar an den Gelenkelementen 46e angebunden. Über die Gelenkelemente 46e und die Koppelelemente sind die beiden Grundköpper 88e, 90e zueinander schwenkbar. Grundsätzlich wäre es auch denkbar, dass die Lagereinheit 138e ein oder mehrere lange Gelenkelemente aufweist, die direkt eine Lagerachse zwischen den beiden Grundkörpern 88e, 90e ausbilden. Der Grundkörper 88e, 90e bilden zusammen einen Tischgrundkörper aus. Die Grundkörper 88e, 90e bilden in einem ausgeklappten Zustand eine Tischfläche aus. In einem eingeklappten Zustand sind Oberflächen der beiden Grundkörper 88e, 90e, die die Tischfläche ausbilden, aneinander angeklappt. Die Tischeinheit 14e ist zwischen einer Verstaustellung und einer Gebrauchsstellung verstellbar. Die Tischeinheit 14e ist insbesondere über ein Lagermodul zwischen der Gebrauchsstellung und der Verstaustellung verschwenkbar. In der Gebrauchsstellung ist die Tischeinheit 14e mit einer Tischfläche der Tischeinheit 14e im Wesentlichen parallel zu einer Aufständerebene ausgerichtet. In der Verstaustellung ist die Tischeinheit 14e an das Sitzbauteil 12e angeklappt und kann nicht zum Abstellen von Gegenständen genutzt werden.

Die Tischvorrichtung umfasst ein Verriegelmodul 20e. Das Verriegelmodul 20e ist dazu vorgesehen, die Tischeinheit 14e in ihrer Verstaustellung an dem Sitzbauteil 12e zu fixieren. Das Verriegelmodul 20e weist einen verriegelten Zustand auf, in dem es die Tischeinheit 14e in ihrer Verstaustellung verriegelt. Das Verriegelmodul 20e weist einen entriegelten Zustand auf, in dem es die Tischeinheit 14e freigibt, sodass diese aus der Verstaustellung herausbewegt werden kann. Das Verriegelmodul 20e ist insbesondere dazu vorgesehen, die Tischeinheit 14e so an dem Sitzbauteil 12e zu fixieren, dass die Tischeinheit 14e auch in einem Crashfall sicher an dem Sitzbauteil 12e fixiert ist. Dazu ist das Verriegelmodul 20e dazu vorgesehen, die Tischeinheit 14e in mehreren Positionen mit dem Sitzbauteil 12e zu koppeln. Das Verriegelmodul 20e ist insbesondere dazu vorgesehen, die Tischeinheit 14e in zwei gegenüberliegenden Randbereichen 22e, 24e mit dem Sitzbauteil 12e zu koppeln.

Das Verriegelmodul 20e weist eine Anbindungseinheit 28e auf. Die Anbindungseinheit 28e ist fest mit dem Sitzbauteil 12e verbunden. Grundsätzlich ist es auch denkbar, dass die Anbindungseinheit 28e zumindest teilweise oder komplett von dem Sitzbauteil 12e ausgebildet wird. Die Anbindungseinheit 28e weist ein Gehäuse 30e auf. Das Gehäuse 30e ist von einem Grundkörper gebildet. Das Gehäuse 30e ist von einer Grundschale und einer Abdeckplatte gebildet. Das Gehäuse 30e spannt einen Innenraum 32e auf. Der Innenraum 32e des Gehäuses 30e der Anbindungseinheit 28e ist dazu vorgesehen, dass Bauteile des Verriegelmoduls 20e darin angeordnet und/oder gelagert sind. Die Anbindungseinheit 28e ist starr mit dem Sitzbauteil 12e verbunden. Die Anbindungseinheit 28e ist dazu vorgesehen, dass die Tischeinheit 14e in ihrer Verstaustellung an der Anbindungseinheit 28e anbindbar ist. Die Anbindungseinheit 28e ist zumindest teilweise oberhalb der Tischeinheit 14e angeordnet. Die Anbindungseinheit 28e ist in der Verstaustellung der Tischeinheit 14e oberhalb der Tischeinheit 14e angeordnet. Ein Teil der Anbindungseinheit 28e ist in der Verstaustellung der Tischeinheit 14e zwischen der Tischeinheit 14e und dem Sitzbauteil 12e angeordnet.

Die Tischeinheit 14e ist in ihrer Verstaustellung an der Anbindungseinheit 28e verriegelbar. Die Tischeinheit 14e ist über die mit dem Sitzbauteil 12e fest verbundene Anbindungseinheit 28e fest mit dem Sitzbauteil 12e verriegelbar. Das Verriegelmodul 20e umfasst zwei Formschlusselemente 34e, 36e. Die Formschlusselemente 34e, 36e sind zur formschlüssigen Anbindung der Tischeinheit 14e an die Anbindungseinheit 28e vorgesehen. Mittels der Formschlusselemente 34e, 36e ist die Tischeinheit 14e in dem verriegelten Zustand mit der Anbindungseinheit 28e formschlüssig gekoppelt. Die Formschlusselemente 34e, 36e sind in äußeren Randbereichen der Anbindungseinheit 28e angeordnet, die jeweils mit einem der äußeren Randbereiche 22e, 24e der Tischeinheit 14e deckungsgleich angeordnet sind. Die Formschlusselemente 34e, 36e sind im Wesentlichen gleich ausgebildet, weswegen im Folgenden lediglich das Formschlusselement 34e näher beschrieben wird. Das Formschlusselement 34e weist einen Grundkörper 140e auf. Der Grundkörper 140e weist eine Ausnehmung 142e auf. Das Formschlusselement 34e umfasst ein schwenkbar gelagertes Rastelement 144e. Das Rastelement 144e ist schwenkbar in dem Grundkörper 140e gelagert. Das Rastelement 144e ist dazu vorgesehen, in einer Verriegelstellung des Formschlusselements 34e die Ausnehmung 142e zumindest im Wesentlichen zu verschließen. In einer Freigabestellung des Formschlusselements 34e ist das Rastelement 144e dazu vorgesehen, aus einem Bereich der Ausnehmung 142e herausbewegt zu werden, um diese freizugeben.

Zur formschlüssigen Kopplung mit den in der Anbindungseinheit 28e angeordneten Formschlusselementen 34e, 36e weist das Verriegelmodul 20e zwei fest mit der Tischeinheit 14e verbundene Formschlusselemente 38e, 40e auf. Die Formschlusselemente 38e, 40e der Tischeinheit 14e sind korrespondierend zu den Formschlusselementen 34e, 36e der Anbindungseinheit 28e ausgebildet. Die Formschlusselemente 38e, 40e sind von den Gelenkelementen 46e der Lagereinheit 138e ausgebildet. Die von den Gelenkelementen 46e ausgebildeten Formschlusselemente 38e, 40e sind dazu vorgesehen, in der entsprechenden Ausnehmung 142e hinter dem jeweiligen Rastelement 144e des entsprechenden Formschlusselements 34e, 36e einzurasten. Bei einer Verschwenkung der Tischeinheit 14e in ihre Verstaustellung rasten die von dem Gelenkelement 46e ausgebildeten Formschlusselemente 38e, 40e automatisch in den Formschlusselementen 34e, 36e ein. Damit die Formschlusselemente 34e, 36e in einen formschlüssigen Kontakt mit den, von den Gelenkelementen 46e ausgebildeten Formschlusselementen 38e, 40e kommen können, weist der Grundkörper 88e an den Lagerstellen jeweils eine Ausnehmung 146e auf. Dadurch kann die Tischeinheit 14e besonders einfach ausgebildet werden und das Anbindungsprinzip, insbesondere die Formschlusselemente 38e, 40e, in bestehende Tischeinheiten 14e einfach integriert werden.

Das Verriegelmodul 20e umfasst einen Betätigungsmechanismus 42e. Der Betätigungsmechanismus 42e ist dazu vorgesehen, die Formschlusselemente 34e, 36e zu betätigen. Der Betätigungsmechanismus 42e ist dazu vorgesehen, die Rastelemente 144e der Formschlusselemente 34e, 36e zu verschwenken und dadurch die Formschlusselemente 34e, 36e zwischen einer Freigabestellung und einer Verriegelstellung zu verstellen. Der Betätigungsmechanismus 42e ist in der Anbindungseinheit 28e angeordnet. Der Betätigungsmechanismus 42e ist dazu vorgesehen, eine auf ihn ausgeübte Betätigungsbewegung an die beiden Formschlusselemente 34e, 36e weiterzuleiten, um diese zu betätigen, insbesondere um diese von ihrer Verriegelstellung in ihre Freigabestellung zu bewegen. Der Betätigungsmechanismus 42e umfasst ein Rotationselement 100e. Das Rotationselement 100e ist als ein Drehstab ausgebildet. Das Rotationselement 100e ist drehbar in dem Innenraum 32e des Gehäuses 30e gelagert. Das Rotationselement 100e verläuft in einer Querrichtung. Das Rotationselement 100e erstreckt sich zwischen den beiden Randbereichen der Anbindungseinheit 28e. Das Rotationselement 100e erstreckt sich von dem einen Formschlusselement 34e der Anbindungseinheit 28e bis zu dem gegenüberliegenden Formschlusselement 36e der Anbindungseinheit 28e. Grundsätzlich ist es auch denkbar, dass das Verriegelmodul 20e zwei Rotationselemente aufweist, wobei sich je ein Rotationselement von einem Formschlusselement 34e, 36e bis zu einem Mittelbereich der Anbindungseinheit 28e erstreckt. An seinen Enden ist das Rotationselement 100e jeweils mit dem Rastelement 144e des entsprechenden Formschlusselements 34e, 36e gekoppelt. Das Rotationselement 100e ist jeweils formschlüssig mit dem Rastelement 144e des entsprechenden Formschlusselements 34e, 36e gekoppelt. Die Rastelemente 144e sind dabei direkt formschlüssig mit dem Rotationselement 100e verbunden. Die Kopplung der Rastelemente 144e des entsprechenden Formschlusselements 34e, 36e mit dem Rotationselement 100e ist dazu vorgesehen, eine Rotationsbewegung des Rotationselements 100e in eine Verschwenkbewegung der Rastelemente 144e der Formschlusselemente 34e, 36e umzusetzen.

Das Verriegelmodul 20e umfasst ein Betätigungselement 60e. Das Betätigungselement 60e ist zur händischen Bedienung durch einen Passagier vorgesehen. Das Betätigungselement 60e ist dazu vorgesehen, das Verriegelmodul 20e zwischen seiner entriegelten Stellung und seiner verriegelten Stellung zu verstellen. Das Betätigungselement 60e ist als ein schwenkbares Hebelelement ausgebildet. Das Betätigungselement 60e ist an der Anbindungseinheit 28e angebracht. Das Betätigungselement 60e ist mittig an der Anbindungseinheit 28e angebracht. Das Betätigungselement 60e ist dazu vorgesehen, das Rotationselement 100e bei einer Betätigung zu verdrehen. Zur Kopplung mit dem Rotationselement 100e weist das Verriegelmodul 20e einen Koppelmechanismus 102e auf. Der Koppelmechanismus 102e weist ein Hebelelement auf, mittels dessen die Bewegung des Betätigungselements 60e auf das Rotationselement 100e übertragen wird.

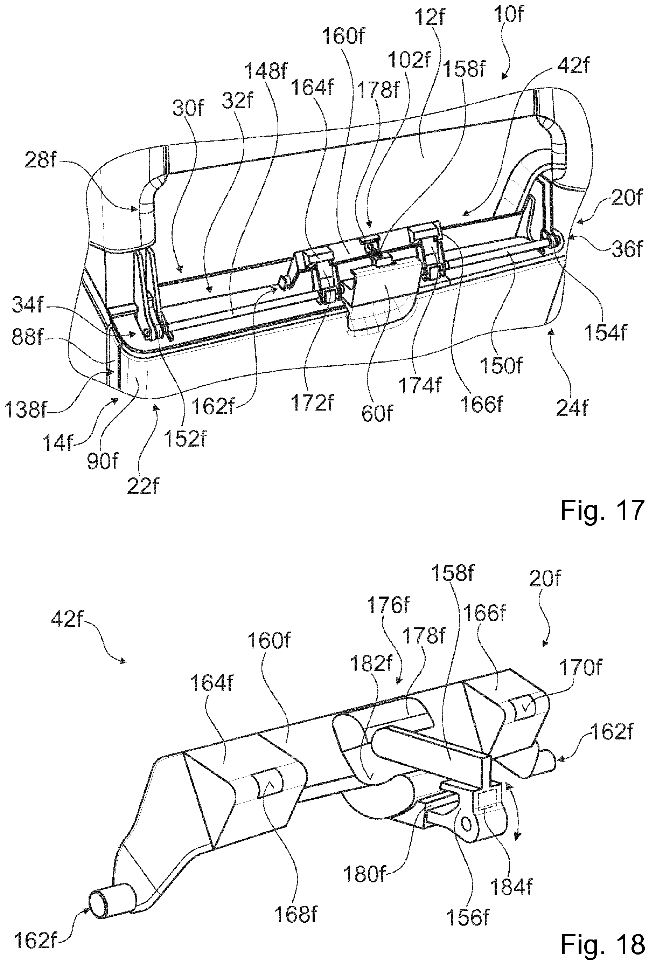

Die Figuren 17 und 18 zeigen eine Tischvorrichtung für einen Sitz 10f in einem sechsten Ausführungsbeispiel. Der Sitz 10f weist ein Sitzbauteil 12f auf. Das Sitzbauteil 12f ist als eine Rückenlehne ausgebildet. Die Tischvorrichtung umfasst eine Tischeinheit 14f. Die Tischeinheit 14f ist von zwei zueinander verschwenkbaren Grundkörpern 88f, 90f ausgebildet. Die Tischvorrichtung weist eine Lagereinheit 138f auf, über die die beiden Grundkörper 88f, 90f schwenkbar miteinander verbunden sind. Die Lagereinheit 138f weist zwei Lagerstellen auf, an denen die beiden Grundkörper 88f, 90f miteinander schwenkbar verbunden sind. An den Lagerstellen weist die Lagereinheit 138f je Grundkörper 88f, 90f ein mit dem jeweiligen Grundkörper 88f, 90f verbundenes Gelenkelement auf. Die Grundkörper 88f, 90f bilden in einem ausgeklappten Zustand eine Tischfläche aus. Im Wesentlichen ist die Tischeinheit 14f gleich ausgebildet wie in dem fünften Ausführungsbeispiel in den Figuren 15 und 16.

Die Tischvorrichtung umfasst ein Verriegelmodul 20f. Das Verriegelmodul 20f ist vom grundsätzlichen Aufbau ähnlich ausgebildet wie das Verriegelmodul des fünften Ausführungsbeispiels in den Figuren 15 und 16. Das Verriegelmodul 20f ist dazu vorgesehen, die Tischeinheit 14f in ihrer Verstaustellung an dem Sitzbauteil 12f zu fixieren. Das Verriegelmodul 20f weist einen verriegelten Zustand auf, in dem es die Tischeinheit 14f in ihrer Verstaustellung verriegelt. Das Verriegelmodul 20f weist einen entriegelten Zustand auf, in dem es die Tischeinheit 14f freigibt, sodass diese aus der Verstaustellung herausbewegt werden kann. Das Verriegelmodul 20f ist insbesondere dazu vorgesehen, die Tischeinheit 14f so an dem Sitzbauteil 12f zu fixieren, dass die Tischeinheit 14f auch in einem Crashfall sicher an dem Sitzbauteil 12f fixiert ist. Dazu ist das Verriegelmodul 20f dazu vorgesehen, die Tischeinheit 14f in mehreren Positionen mit dem Sitzbauteil 12f zu koppeln. Das Verriegelmodul 20f ist insbesondere dazu vorgesehen, die Tischeinheit 14f in zwei gegenüberliegenden Randbereichen 22f, 24f mit dem Sitzbauteil 12f zu koppeln.

Das Verriegelmodul 20f weist eine Anbindungseinheit 28f auf. Die Anbindungseinheit 28f ist fest mit dem Sitzbauteil 12f verbunden. Die Anbindungseinheit 28f weist ein Gehäuse 30f auf. Das Gehäuse 30f spannt einen Innenraum 32f auf. Der Innenraum 32f des Gehäuses 30f der Anbindungseinheit 28f ist dazu vorgesehen, dass Bauteile des Verriegelmoduls 20f darin angeordnet und/oder gelagert sind. Die Anbindungseinheit 28f ist dazu vorgesehen, dass die Tischeinheit 14f in ihrer Verstaustellung an der Anbindungseinheit 28f anbindbar ist.

Die Tischeinheit 14f ist in ihrer Verstaustellung an der Anbindungseinheit 28f verriegelbar. Die Tischeinheit 14f ist über die mit dem Sitzbauteil 12f fest verbundene Anbindungseinheit 28f fest mit dem Sitzbauteil 12f verriegelbar. Das Verriegelmodul 20f umfasst zwei Formschlusselemente 34f, 36f. Die Formschlusselemente 34f, 36f sind zur formschlüssigen Anbindung der Tischeinheit 14f an die Anbindungseinheit 28f vorgesehen. Die Formschlusselemente 34f, 36f sind in äußeren Randbereichen der Anbindungseinheit 28f angeordnet, die jeweils mit einem äußeren Randbereich 22f, 24f der Tischeinheit 14f deckungsgleich angeordnet sind. Die Formschlusselemente 34f, 36f sind im Wesentlichen gleich ausgebildet wie die entsprechenden Formschlusselemente des fünften Ausführungsbeispiels der Figuren 15 und 16, weswegen die Formschlusselemente 34f, 36f im Folgenden nicht näher beschrieben werden sollen. Entsprechend korrespondierend ausgebildete Formschlusselemente der Anbindungseinheit 28f, die fest mit der Tischeinheit 14f verbunden und im verriegelten Zustand zur Kopplung mit den Formschlusselementen 34f, 36f vorgesehen sind, sind ebenfalls identisch zu denen des fünften Ausführungsbeispiels der Figuren 15 und 16 ausgebildet, weswegen auch hier im Folgenden auf eine Beschreibung verzichtet wird.

Das Verriegelmodul 20f umfasst einen Betätigungsmechanismus 42f. Der Betätigungsmechanismus 42f ist dazu vorgesehen, die Formschlusselemente 34f, 36f zu betätigen. Der Betätigungsmechanismus 42f ist dazu vorgesehen, nicht näher dargestellte Rastelemente der Formschlusselemente 34f, 36f zu verschwenken und dadurch die Formschlusselemente 34f, 36f zwischen einer Freigabestellung und einer Verriegelstellung zu verstellen. Der Betätigungsmechanismus 42f ist in der Anbindungseinheit 28f angeordnet. Der Betätigungsmechanismus 42f ist dazu vorgesehen, eine auf ihn ausgeübte Betätigungsbewegung an die beiden Formschlusselemente 34f, 36f weiterzuleiten, um diese zu betätigen, insbesondere um diese von ihrer Verriegelstellung in ihre Freigabestellung zu bewegen.

Der Betätigungsmechanismus 42f umfasst zwei Rotationselemente 148f, 150f. Die Rotationselemente 148f, 150f sind jeweils als ein Drehstab ausgebildet. Die Rotationselemente 148f, 150f sind drehbar in dem Innenraum 32f des Gehäuses 30f gelagert. Die Rotationselemente 148f, 150f verlaufen in einer Querrichtung. Je eines der Rotationselemente 148f, 150f ist jeweils zur Übertragung einer Betätigungsbewegung zu einem der Formschlusselemente 34f, 36f vorgesehen. Die Rotationselemente 148f, 150f erstrecken sich jeweils zwischen einem der beiden Randbereiche der Anbindungseinheit 28f bis in einen Mittelbereich. Der Betätigungsmechanismus 42f umfasst zwei Koppelelemente 152f, 154f, die jeweils drehfest an einem äußeren Ende eines der beiden Rotationselemente 148f, 150f angebunden sind. Die Kopplungselemente 152f, 154f koppeln die Rotationselemente 148f, 150f jeweils mit dem entsprechenden Formschlusselement 34f, 36f und übersetzen eine Drehbewegung des jeweiligen Rotationselements 148f , 150f in eine entsprechende Bewegung eines Rastelements des entsprechenden Formschlusselements 34f, 36f.

Das Verriegelmodul 20f umfasst ein Betätigungselement 60f. Das Betätigungselement 60f ist zur händischen Bedienung durch einen Passagier vorgesehen. Das Betätigungselement 60f ist dazu vorgesehen, das Verriegelmodul 20f zwischen seiner entriegelten Stellung und seiner verriegelten Stellung zu verstellen. Das Betätigungselement 60f ist als ein schwenkbares Hebelelement ausgebildet. Das Betätigungselement 60f ist an der Anbindungseinheit 28f angebracht. Das Betätigungselement 60f ist mittig an der Anbindungseinheit 28f angebracht. Das Betätigungselement 60f ist dazu vorgesehen, die Rotationselemente 148f, 150f bei einer Betätigung zu verdrehen. Dabei ist das Betätigungselement 60f insbesondere nicht direkt mit den Rotationselementen 148f, 150f gekoppelt.

Zur Kopplung mit den Rotationselementen 148f, 150f weist das Verriegelmodul 20f einen Koppelmechanismus 102f auf. Der Koppelmechanismus 102f weist ein Hebelelement 156f auf, mittels dessen die Bewegung des Betätigungselements 60f auf das Rotationselement 100f übertragen wird. Das Hebelelement 156f ist drehfest mit dem Betätigungselement 60f verbunden. Grundsätzlich wäre es auch denkbar, dass das Hebelelement 156f einstückig mit dem Betätigungselement 60f ausgebildet ist. Grundsätzlich ist es ebenso denkbar, dass das Hebelelement 156f zumindest teilweise beweglich zu dem Betätigungselement 60f ausgebildet ist, also eine minimale Bewegung zwischen den beiden Elementen möglich ist. Das Hebelelement 156f umfasst einen länglich ausgeformten Betätigungshebel 158f. Grundsätzlich ist es auch denkbar, dass das Hebelelement 156f zwei oder mehr nebeneinander angeordnete, im Wesentlichen gleich ausgebildete Betätigungshebel 158f aufweist. Der Betätigungshebel 158f erstreckt sich in Richtung des Betätigungsmechanismus 42f. Der Betätigungshebel 158f ist einstückig mit dem Hebelelement 156f ausgebildet. Der Betätigungshebel 158f ist dazu vorgesehen, eine Schwenkbewegung des Hebelelements 156f, also eine Schwenkbewegung des Betätigungselements 60f zu übertragen.

Der Koppelmechanismus 102f umfasst ein Umlenkelement 160f. Das Umlenkelement 160f ist dazu vorgesehen, eine Bewegung des Hebelelements 156f auf die Rotationselemente 148f, 150f zu übertragen. Das Umlenkelement 160f ist in einem Mittelbereich der Anbindungseinheit 28f angeordnet. Das Umlenkelement 160f ist insbesondere zentral in der Anbindungseinheit 28f angeordnet. Das Umlenkelement 160f ist mittig zwischen den Außenkanten der Tischeinheit 14f angeordnet. Das Umlenkelement 160f ist insbesondere unmittelbar bei dem Betätigungselement 60f und dem Hebelelement 156 angeordnet. Das Umlenkelement 160f weist im Wesentlichen eine Bügelform auf. Das Umlenkelement 160f ist schwenkbar in dem Innenraum 32f des Gehäuses 30f gelagert. Das Umlenkelement 160f bildet Lagerbolzen 162f aus, über die das Umlenkelement 160f über nicht näher dargestellte Aufnahmen in dem Innenraum 32f des Gehäuses 30f über eine Lagerung, vorzugsweise eine Gleitlagerung, schwenkbar gelagert ist. Die beiden Lagerbolzen 162f sind insbesondere auf gegenüberliegenden Seiten des Betätigungselements 60f angeordnet. Das Umlenkelement 160f weist zwei Übertragungsmittel 164f, 166f auf. Die Übertragungsmittel 164f, 166f sind dazu vorgesehen, eine Schwenkbewegung des Umlenkelements 160f an jeweils eines der Rotationselemente 148f, 150f zu übertragen. Die Übertragungsmittel 164f, 166f sind auf gegenüberliegenden Seiten des Betätigungselements 60f angeordnet. Die Übertragungsmittel 164f, 166f sind jeweils in einem in dem Mittelbereich angeordneten Ende des entsprechenden Rotationselements 148f, 150f angeordnet. Die Übertragungsmittel 164f, 166f sind jeweils als Übertragungserhebungen ausgebildet. Die als Übertragungserhebungen ausgebildeten Übertragungsmittel 164f, 166f bilden jeweils eine Kontaktfläche 168f, 170f. Die Kontaktflächen 168f, 170f sind konkav ausgebildet. Grundsätzlich wäre es auch denkbar, dass die Übertragungsmittel 164f, 166f von drehbar gelagerten Wälzlagern oder Rollen ausgebildet sind, wobei die Kontaktflächen 168f, 170f von den drehbaren Außenflächen der Wälzlager gebildet wären. Der Koppelmechanismus 102f weist je Rotationselement 148f, 150f einen drehfest mit dem jeweiligen Rotationselement 148f, 150f verbundenen Hebel 172f, 174f auf. Die Hebel 172f, 174f sind zur Übertragung der Bewegung von dem Umlenkelement 160f auf die jeweiligen Rotationselemente 148f, 150f vorgesehen. Die Hebel 172f, 74f stehen in einem Kontakt mit den Kontaktflächen 168f, 170f der Übertragungsmittel 164f, 166f des Umlenkelements 160f. Die Kontaktflächen 168f, 170f der Übertragungsmittel 164f, 166f sind exzentrisch zu einer Rotationsachse der Lagerbolzen 162f angeordnet, um die das Umlenkelement 160f bei einer Betätigung verschwenkt wird. Zur Aufnahme der Bewegung des Hebelelements 156f weist das Umlenkelement 160f eine Kontaktfläche 182f auf. Die Kontaktfläche 182f ist von dem Umlenkelement 160f ausgebildet. Die Kontaktfläche 182f ist konkav ausgebildet. Grundsätzlich wäre es auch denkbar, dass die Kontaktfläche 182f von einem Rollenelement ausgebildet ist. Die Kontaktfläche 182f ist im Bereich des Hebelelements 156f angeordnet. Die Kontaktfläche 182f ist für einen Kontakt mit dem Betätigungshebel 158f des Hebelelements 156f vorgesehen. Bei einer Verschwenkung des Hebelelements 156f durch Betätigung des Betätigungselements 60f kommt der Betätigungshebel 158f in Kontakt mit der Kontaktfläche 182f, läuft auf dieser ab und übt so eine Kraft auf das Umlenkelement 160f aus, durch die das Umlenkelement 160f um die von den Lagerbolzen 162f gebildete Lagerachse schwenkt. Durch die Verschwenkung des Umlenkelements 160f von einer Verriegellage in eine Entriegellage werden die Hebel 172f, 174f, die drehfest mit jeweils einem der Rotationselemente 148f, 150f verbunden sind, ausgelenkt und das jeweilige Rotationselement 148f, 150f wird dadurch zur Entriegelung der Formschlusselemente 34f, 36f verdreht.

Das Verriegelmodul 20f umfasst eine Sicherungsvorrichtung 176f. Die Sicherungsvorrichtung 176f ist dazu vorgesehen, ein ungewolltes Entriegeln der Tischeinheit 14f zu verhindern. Die Sicherungsvorrichtung 176f ist insbesondere dazu vorgesehen, ein Entriegeln des Tischs in einem Überlastfall zu verhindern. Die Sicherungsvorrichtung 176f ist insbesondere dazu vorgesehen, bei einem Überlastfall, bei dem insbesondere große Beschleunigungskräfte, beispielsweise durch einen Aufprall eines Passagiers oder eines Crashtestdummys während eines Crashtests (HIC-Test), auf den Sitz 10 und die Tischvorrichtung wirken, ein Entriegeln des Verriegelmoduls 20f und dadurch der Tischeinheit 14f zu verhindern. Die Sicherungsvorrichtung 176f ist in den Koppelmechanismus 102f integriert. Die Sicherungsvorrichtung 176f ist insbesondere dazu vorgesehen, eine durch die, während des Überlastfalls auftretende auf die Tischvorrichtung wirkende Beschleunigung verursachte Bewegung des Hebelelements 156f zu verhindern. Durch seine Massenträgheit und die Bewegung, die ein auf die Tischvorrichtung prallender Crashtestdummy einbringen würde, würde sich das Hebelelement 156f bei einer starken Beschleunigung in einer Sitzrichtung des Sitzes 10f (beispielsweise bei einem HIC-Test (Aufpralltest mit Crashtestdummys auf Rückenlehne des Sitzes)) in Richtung des Umlenkelements 160f bewegen. Diese Bewegung und eine daraus resultierende mögliche Entriegelung des Tisches durch eine Verschwenkung des Umlenkelements 160f ist durch die Sicherungsvorrichtung 176f verhindert. Durch die Sicherungsvorrichtung 176f ist insbesondere ein Eingreifen des Betätigungshebels 158f des Hebelelements 156f in die Kontaktfläche 182f des Umlenkelements 160f und eine daraus folgende Verschwenkung des Umlenkelements 160f verhindert. Die Sicherungsvorrichtung 176f ist insbesondere von dem Umlenkelement 160f ausgebildet. Die Sicherungsvorrichtung 176f weist zwei Blockierelemente 178f, 180f auf. Die Blockierelemente 178f, 180f sind als Erhebungen auf dem Umlenkelement 160f, insbesondere im Bereich des Hebelelements 156f, ausgebildet. Das erste Blockierelement 178f ist als ein oberes Blockierelement 178f ausgebildet. Das obere Blockierelement 178f ist im Bereich des Betätigungshebels 158f angeordnet. Das Blockierelement 178f ist oberhalb der Kontaktfläche 182f des Umlenkelements 160f angeordnet. In einer verriegelten Stellung des Verriegelmoduls 20f liegt der Betätigungshebel 158f des Hebelelements 156f an dem Blockierelement 178f an. Grundsätzlich wäre es denkbar, dass der Betätigungshebel 158f des Hebelelements 156f einen kleinen Abstand zu dem Blockierelement 178f aufweist. In einem Normalbetriebszustand schwenkt der Betätigungshebel 158f bei einer Verschwenkung durch eine Betätigung des Betätigungselements 60f an dem Blockierelement 178f vorbei. Das zweite Blockierelement 180f ist als ein unteres Blockierelement 180f ausgebildet. Das untere Blockierelement 180f ist in einem unteren Bereich des Hebelelements 156f angeordnet. Das Blockierelement 180f ist unterhalb der Kontaktfläche 182f des Umlenkelements 160f angeordnet. In der verriegelten Stellung des Verriegelmoduls 20f liegt das Hebelelement 156f an dem Blockierelement 180f an. Grundsätzlich wäre es denkbar, dass das Hebelelement 156f einen kleinen Abstand zu dem Blockierelement 180f aufweist. In einem Normalbetriebszustand schwenkt das Hebelelement 156f bei einer Verschwenkung durch eine Betätigung des Betätigungselements 60f an dem Blockierelement 180f vorbei. In einem Überlastfall mit einer starken Beschleunigung wird das Hebelelement 156f in Richtung des Umlenkelements 160f beschleunigt. Dadurch wird der Betätigungshebel 158f des Hebelelements 156f gegen das Blockierelement 178f und ein unterer Bereich des Hebelelements gegen das Blockierelement 180f gedrückt. Durch das Anschlagen des Betätigungshebels 158f des Hebelelements 156f und des unteren Bereichs des Hebelelements 156f mit dem jeweiligen Blockierelement 178f, 180f ist das Hebelelement 156f gesperrt und kann nicht rotieren. Dadurch kann insbesondere der Betätigungshebel 158f in dem Überlastfall nicht in Kontakt mit der Kontaktfläche 182f des Umlenkelements 160f kommen. Dadurch kann insbesondere eine Entriegelung der Tischeinheit 14f in dem Überlastfall verhindert werden.

Grundsätzlich wäre es ebenso denkbar, dass das Verriegelmodul 20f ein anders ausgebildetes Betätigungselement 184f umfasst. Dabei ist insbesondere denkbar, dass das Verriegelmodul 20f anstelle des als schwenkbares Hebelelement ausgebildeten Betätigungselements 60f ein als Druckelement ausgebildetes Betätigungselement 184f umfasst. Ein als Druckelement ausgebildetes Betätigungselement 184f könnte dabei insbesondere an der in der Figur 18 gestrichelt angedeuteten Stelle in das Verriegelmodul 20f integriert werden. Das als Druckknopf ausgebildete Betätigungselement 184f würde dabei eine Axialbewegung auf das Hebelelement 156f ausüben und dadurch eine Rotation des Hebelelements 156f induzieren. Grundsätzlich wäre es ebenso denkbar, dass das Betätigungselement als ein verschwenkbarer Hebel ausgebildet ist, der um eine Achse, die orthogonal zu den Rotationselementen 148f, 150f steht, drehbar ist und dabei über eine Kulissenführung oder Ähnliches das Verriegelmodul 20f betätigt.

## Patentansprüche

1. Flugzeugsitz, mit zumindest einem Sitzbauteil (12a; 12b; 12c; 12d; 12e), insbesondere einem als Rückenlehne ausgebildeten Sitzbauteil (12a; 12b; 12c; 12d; 12e), und mit einer Tischvorrichtung für den Flugzeugsitz, mit einer Tischeinheit (14a; 14b; 14c; 14d; 14e), die dazu vorgesehen ist, zumindest zwischen einer Gebrauchsstellung und einer Verstaustellung verstellbar zu sein, und mit wenigstens einem Verriegelmodul (20a; 20b; 20c; 20d; 20e), das wenigstens eine Anbindungseinheit (28a; 28b; 28c; 28d; 28e) aufweist, die in einem montierten Zustand fest und fixiert mit dem Sitzbauteil (12) verbunden ist, wobei die Tischeinheit (14a; 14b; 14c; 14d; 14e) zumindest in der Verstaustellung an der Anbindungseinheit (28a; 28b; 28c; 28d; 28e) verriegelbar ist, wobei das Verriegelmodul (20a; 20b; 20c; 20d; 20e) zumindest zwei Kraft- und/oder Formschlusselemente (34a, 36a, 38a, 40a; 34b, 36b, 38b, 40b; 34c, 36c, 38c, 40c; 34d, 36d, 38d, 40d; 34e, 36e, 38e, 40e) aufweist, mittels deren die Tischeinheit (14a; 14b; 14c; 14d) in einem verriegelten Zustand form- und/oder kraftschlüssig mit der Anbindungseinheit (28a; 28b; 28c; 28d) gekoppelt ist, wobei das Verriegelmodul (20a; 20c, 20d) einen Betätigungsmechanismus (42a; 42c; 42d) aufweist, der in der Anbindungseinheit (28a; 28c; 28d) angeordnet und dazu vorgesehen ist, die Kraft- und/oder Formschlusselemente (34a, 36a; 34c, 36c;34d, 36d) zu betätigen, und das Verriegelmodul (20a; 20b) wenigstens ein Betätigungselement (60a; 60b) aufweist, das bei einer Kopplung mit der Anbindungseinheit (28a) dazu vorgesehen ist, den Betätigungsmechanismus (42a) zu betätigen, und das zur händischen Bedienung durch einen Passagier vorgesehen ist **dadurch gekennzeichnet, dass** das Betätigungselement an die Tischeinheit (14a; 14b) angebunden ist, und wenigstens ein Kraft- und/oder Formschlusselement (62a; 62b) aufweist, mittels dessen die Tischeinheit (14a; 14b) in einem verriegelten Zustand form- und/oder kraftschlüssig mit der Anbindungseinheit (28a; 28b) gekoppelt ist.

2. Flugzeugsitz nach Anspruch 1, **dadurch gekennzeichnet, dass** die Kraft- und/oder Formschlusselemente (34a, 36a) dazu vorgesehen sind, zwischen einer zumindest im Wesentlichen in der Anbindungseinheit (28a) angeordneten Freigabestellung und einer Verriegelstellung, in der die Kraft- und/oder Formschlusselemente (34a, 36a) zumindest teilweise in die Tischeinheit (14a) formschlüssig eingreifen, verstellt zu werden.

3. Flugzeugsitz nach Anspruch 1, **dadurch gekennzeichnet, dass** das Betätigungselement (60b) bei einer Kopplung mit der Anbindungseinheit (28b) dazu vorgesehen ist, eine Relativbewegung der Tischeinheit (14b) und der Anbindungseinheit (28b) auszulösen.

4. Flugzeugsitz nach einem der vorhergehenden Ansprüche, **dadurch gekennzeichnet, dass** die Kraft- und/oder Formschlusselemente (34b, 36b) dazu vorgesehen sind, die Tischeinheit (14b) durch einen Reibschluss zu verriegeln und bei einer Kraft in einer Öffnungsrichtung (86b) der Tischeinheit (14b) durch eine Selbstverstärkung den Reibschluss zu vergrößern.

5. Flugzeugsitz nach einem der vorhergehenden Ansprüche, **dadurch gekennzeichnet, dass** die Kraft- und/oder Formschlusselemente (38c, 40c; 38d, 40d) in der Tischeinheit (14c; 14d) angeordnet und dazu vorgesehen sind, zur Verriegelung der Tischeinheit (14c; 14d) jeweils von wenigstens einem in der Anbindungseinheit (28c; 28d) angeordneten Formschlusselement (34c, 36c; 34d, 36d) zumindest im Wesentlichen umschlossen zu werden, wobei das in der Anbindungseinheit (28c; 28d) angeordnete Formschlusselement (34c, 36c; 34d, 38d) zur Entriegelung elastisch auslenkbar und/oder bewegbar gelagert ist.

6. Flugzeugsitz nach Anspruch 5, **dadurch gekennzeichnet, dass** das Verriegelmodul (20d) wenigstens ein Entriegelungselement (128d, 130d) aufweist, das zur Entriegelung der Kraft- und/oder Formschlusselemente (34d, 36d) dazu vorgesehen ist, die Formschlusselemente (34d, 36d) zumindest teilweise elastisch zu verformen und/oder zu bewegen.

7. Flugzeugsitz nach einem der vorhergehenden Ansprüche, **dadurch gekennzeichnet, dass** die Kraft- und/oder Formschlusselemente (34c, 36c, 38c, 40c; 34d, 36d, 38d, 40d) dazu vorgesehen sind, die Tischeinheit (14c; 14d) in einer in Öffnungsrichtung (86c; 86d) der Tischeinheit (14c; 14d) lösbaren kraft- und/oder formschlüssigen Verbindung mit der Anbindungseinheit (28c; 28d) zu koppeln.

8. Flugzeugsitz nach einem der vorhergehenden Ansprüche, **dadurch gekennzeichnet, dass** das Verriegelmodul (20c) einen Betätigungsmechanismus (42c) aufweist, der wenigstens ein Hebelelement (108c, 110c) umfasst, das dazu vorgesehen ist, wenigstens eines der Kraft- und/oder Formschlusselemente (34c, 36c) aktiv aus einer Verriegelstellung zu drücken oder zu ziehen.

9. Flugzeugsitz nach einem der vorhergehenden Ansprüche, **dadurch gekennzeichnet, dass** die Tischeinheit (14e) von wenigstens zwei Grundkörpern (88e, 90e) ausgebildet ist, die über wenigstens eine Lagereinheit (138e) schwenkbar miteinander verbunden sind, die dazu wenigstens ein Gelenkelement (46e) aufweisen, wobei die von der Tischeinheit (14e) ausgebildeten Kraft- und/oder Formschlusselemente (38e, 40e) von dem Gelenkelement (46e) ausgebildet sind.

10. Flugzeugsitz nach Anspruch 1, **dadurch gekennzeichnet, dass** das Sitzbauteil (12a) einen Aufbewahrungsbereich (136a), insbesondere eine hohe Literarturtasche ausbildet, wobei die Tischvorrichtung eine als Rückenlehnenbrücke ausgebildete Anbindungseinheit (28a) aufweist, wobei zwischen der Anbindungseinheit (28a) und dem Sitzbauteil (12a) eine Öffnung (134a) angeordnet ist, die eine Befüllungsöffnung des Aufbewahrungsbereichs (136a) ausbildet.

## Claims

1. Aircraft seat,
with at least one a seat component (12a; 12b; 12c; 12d; 12e), in particular a seat component (12a; 12b; 12c; 12d; 12e) realized as a backrest,
and with a table device for the aircraft seat,
with a table unit (14a; 14b; 14c; 14d; 14e) which is configured for being adjustable at least between a use position and a stowage position,
and with at least one locking module (20a; 20b; 20c; 20d; 20e) comprising at least one connection unit (28a; 28b; 28c; 28d; 28e) which is in a mounted state firmly and fixedly connected to the seat component (12), wherein the table unit (14a; 14b; 14c; 14d; 14e) at least in the stowage position is lockable to the connection unit (28a; 28b; 28c; 28d; 28e),
wherein the locking module (20a; 20b; 20c; 20d; 20e) has at least two force-fit and/or form-fit elements (34a, 36a, 38a, 40a; 34b, 36b, 38b, 40b; 34c, 36c, 38c, 40c; 34d, 36d, 38d, 40d; 34e, 36e, 38e, 40e), by means of which the table unit (14a; 14b; 14c; 14d) in a locked state is coupled in a form-fitting and/or force-fitting manner with the connection unit (28a; 28b; 28c; 28d),
wherein the locking module (20a; 20c; 20d) comprises an actuation mechanism (42a; 42c; 42d) which is disposed in the connection unit (28a; 28c; 28d) and is configured for an actuation of the force-fit and/or form-fit elements (34a, 36a; 34c, 36c; 34d, 36d), and
the locking module (20a; 20b) comprises at least one actuation element (60a; 60b) which is in a coupling with the connection unit (28a) configured to actuate the actuation mechanism (42a) and is configured to be manually operated by a passenger,
**characterised in that** the actuation element is connected to the table unit (14a; 14b), and has at least one force-fit and/or form-fit element (62a; 62b) by means of which the table unit (14a; 14b) in a locked state is coupled in a form-fitting and/or force-fitting manner to the connection unit (28a; 28b).

2. Aircraft seat according to claim 1,
**characterised in that** the force-fit and/or form-fit elements (34a, 36a) are configured to be adjusted between a release position, disposed at least substantially in the connection unit (28a), and a locked position, in which the force-fit and/or form-fit elements (34a, 36a) at least in part engage in the table unit (14a) in a form-fitting manner.

3. Aircraft seat according to claim 1,
**characterised in that** in a coupling with the connection unit (28b) the actuation element (60b) is configured for initiating a relative movement of the table unit (14b) and the connection unit (28b).

4. Aircraft seat according to one of the preceding claims,
**characterised in that** the force-fit and/or form-fit elements (34b, 36b) are configured for locking the table unit (14b) by way of a friction fit and if there is a force in an opening direction (86b) of the table unit (14b), for increasing the friction fit by way of self-reinforcement.

5. Aircraft seat according to one of the preceding claims,
**characterised in that** the force-fit and/or form-fit elements (38c, 40c; 38d, 40d) are disposed in the table unit (14c; 14d) and for a locking of the table unit (14c; 14d) are configured to be in each case at least substantially encompassed by at least one form-fit element (34c, 36c; 34d, 36d) disposed in the connection unit (28c; 28d),
wherein the form-fit element (34c, 36c; 34d, 38d) disposed in the connection unit (28c; 28d) for unlocking is supported so as to be elastically deflectable and/or movable.

6. Aircraft seat according to claim 5,
**characterised in that** the locking module (20d) comprises at least one unlocking element (128d, 130d) which for an unlocking of the force-fit and/or form-fit elements (34d, 36d) is configured for at least in part elastically deforming and/or moving the form-fit elements (34d, 36d).

7. Aircraft seat according to one of the preceding claims,
**characterised in that** the force-fit and/or form-fit elements (34c, 36c, 38c, 40c; 34d, 36d, 38d, 40d) are configured for coupling the table unit (14c; 14d) with the connection unit (28c; 28d) by way of a force-fitting and/or form-fitting connection that is releasable in an opening direction (86c; 86d) of the table unit (14c; 14d).

8. Aircraft seat according to one of the preceding claims,
**characterized in that** the locking module (20c) has an actuation mechanism (42c) comprising at least one lever element (108c, 110c) which is configured for actively pushing or pulling at least one of the force-fit and/or form-fit elements (34c, 36c) out of a locked position.

9. Aircraft seat according to one of the preceding claims,
**characterized in that** the table unit (14e) is realized by at least two base bodies (88e, 90e) which are pivotably connected to one another via at least one bearing unit (138e) and which to this end have at least one articulation element (46e), wherein the force-fit and/or form-fit elements (38e, 40e) formed by the table unit (14e) are realized by the articulation element (46e).

10. Aircraft seat according to claim 1,
**characterised in that** the seat component (12a) forms a storage region (136a), in particular a high literature pocket,
wherein the table device comprises a connection unit (28a) realized as a backrest bridge, wherein an opening (134a) that forms a fill-in opening of the storage region (136a) is disposed between the connection unit (28a) and the seat component (12a).

## Revendications

1. Siège d'aéronef,
avec au moins un composant de siège (12a ; 12b ; 12c ; 12d ; 12e), notamment un composant de siège (12a ; 12b ; 12c ; 12d ; 12e) réalisé comme dossier, et avec un dispositif de table pour le siège d'aéronef,
avec une unité de table (14a ; 14b ; 14c ; 14d ; 14e) conçue pour être ajustable au moins entre une position d'usage et une position de rangement,
et avec au moins un module à verrouillage (20a ; 20b ; 20c ; 20d ; 20e)
comprenant au moins une unité de raccordement (28a ; 28b ; 28c ; 18d ; 28e) qui en état monté est raccordée avec le composant de siège (12) de façon ferme et fixe, l'unité de table (14a ; 14b ; 14c ; 14d ; 14e) étant verrouillable sur l'unité de raccordement (28a ; 28b ; 28c ; 28d ; 28e) au moins dans la position de rangement,
où le module à verrouillage (20a ; 20b ; 20c ; 20d ; 20e) comprend au moins deux éléments de liaison en force et/ou en forme (34a, 36a, 38a, 40a ; 34b, 36b, 38b, 40b ; 34c, 36c, 38c, 40c ; 34d, 36d, 38d, 40d ; 34e, 36e, 38e, 40e) par le biais desquels en état verrouillé l'unité de table (14a ; 14b ; 14c ; 14d) est couplé avec l'unité de raccordement (28a ; 28b ; 28c ; 28d) par liaison de forme et/ou de force,
le module à verrouillage (20a ; 20c ; 20d) comprenant un mécanisme d'actionnement (42a ; 42c ; 42d) qui est disposé dans l'unité de raccordement (28a ; 28c ; 28d) et est configuré pour un actionnement des éléments de liaison en force et/ou en forme (34a, 36a ; 34c, 36c ; 34d, 36d)
et le module à verrouillage (20a ; 20b) comprenant au moins un élément d'actionnement (60a ; 60b) qui est conçu pour actionner le mécanisme d'actionnement (42a) dans un couplage avec l'unité de raccordement (28a) et qui est conçu pour un maniement manuel par un passager,
**caractérisé en ce que** l'élément d'actionnement est raccordé à l'unité de table (14a ; 14b) et comprend au moins un élément de liaison en force et/ou en forme (62a ; 62b) par lequel l'unité de table (14a ; 14b) est en état verrouillé couplée avec l'unité de raccordement (28a ; 28b) par liaison en forme et/ou en force.

2. Siège d'aéronef selon la revendication 1,
**caractérisé en ce que** les éléments de liaison en force et/ou en forme (34a, 36a) sont conçus pour être ajustés entre une position de relâchement disposée au moins sensiblement dans l'unité de raccordement (28a) et une position de verrouillage dans laquelle les éléments de liaison en force et/ou en forme (34a, 36a) engrènent au moins partiellement dans l'unité de table (14a) par liaison en forme.

3. Siège d'aéronef selon la revendication 1,
**caractérisé en ce que** l'élément d'actionnement (60b) est conçu, dans un couplage avec l'unité de raccordement (28b), pour déclencher un mouvement relatif de l'unité de table (14b) et l'unité de raccordement (28b).

4. Siège d'aéronef selon l'une des revendications précédentes,
**caractérisé en ce que** les éléments de liaison en force et/ou en forme (34b, 36b) sont conçus pour verrouiller l'unité de table (14b) moyennant une connexion en friction et pour augmenter la connexion en friction par auto-renforçage s'il y a une force dans une direction d'ouverture (86b) de l'unité de table (14b).

5. Siège d'aéronef selon l'une des revendications précédentes,
**caractérisé en ce que** les éléments de liaison en force et/ou en forme (38c, 40c ; 38d, 40d) sont disposés dans l'unité de table (14c ; 14d) et sont conçus, pour le verrouillage de l'unité de table (14c ; 14d), pour être respectivement entourés au moins sensiblement par au moins un élément de liaison en forme (34c, 36c ; 34d, 36d) disposé dans l'unité de raccordement (28c ; 28d),
où pour le verrouillage l'élément de liaison en forme (34c, 36c ; 34d, 36d) disposé dans l'unité de raccordement (28c ; 28d) est supporté d'une telle manière qu'il puisse être élastiquement défléchi et/ou mu.

6. Siège d'aéronef selon la revendication 5,
**caractérisé en ce que** le module à verrouillage (20d) comprend au moins un élément de déverrouillage (128d, 130d) conçu, pour le déverrouillage des éléments de liaison en force et/ou en forme (34d, 36d), pour au moins partiellement déformer les éléments de liaison en forme (34d, 36d) élastiquement et/ou pour au moins partiellement mouvoir les éléments de liaison en forme (34d, 36d).

7. Siège d'aéronef selon l'une des revendications précédentes,
**caractérisé en ce que** les éléments de liaison en force et/ou en forme (34c, 36c, 38c, 40c ; 34d, 36d, 38d, 40d) sont conçus pour coupler l'unité de table (14c ; 14d) avec l'unité de raccordement (28c ; 28d) par une liaison en force et/ou en forme qui peut être relâchée dans une direction d'ouverture (86c ; 86d) de l'unité de table (14c ; 14d).

8. Siège d'aéronef selon l'une des revendications précédentes,
**caractérisé en ce que** le module à verrouillage (20c) inclut un mécanisme d'actionnement (42c) comprenant au moins un élément de levier (108c, 110c) qui est conçu pour activement pousser ou tirer au moins un des éléments de liaison en force et/ou en forme (34c, 36c) d'une position de verrouillage.

9. Siège d'aéronef selon l'une des revendications précédentes,
**caractérisé en ce que** l'unité de table (14e) est formée par au moins deux corps de base (88e, 90e) qui sont liés l'un à l'autre pivotablement par au moins une unité palier (138e), ladite unité palier (138e) ayant à cette fin au moins un élément d'articulation (46e),
où les éléments de liaison en force et/ou en forme (38e, 40e) formés par l'unité de table (14e) sont formés par l'élément d'articulation (46e).

10. Siège d'aéronef selon la revendication 1,
**caractérisé en ce que** le composant de siège (12a) forme une zone de dépôt (136a), en particulier une poche porte-imprimés allongée,
le dispositif de table comprenant une unité de raccordement (28a) réalisée comme pont-dossier,
où une aperture (134a) est disposée entre l'unité de raccordement (28a) et le composant de siège (12a) qui forme une aperture de remplissage de la zone de dépôt (136a).
